# EUROPEAN PATENT APPLICATION

(11) **EP 4 559 322 A1**
(43) Date of publication of application: **28.05.2025**
(21) Application number: 23842966.6
(22) Date of filing: 18.07.2023
(51) Int. Cl.: A23L 2/00, A23L 2/60, C12G 3/025

(54) **BEVERAGE CONTAINING STEVIOL GLYCOSIDE AND ALCOHOL**

(30) Priority: 19.07.2022 JP 2022114738
(71) Applicant: Suntory Holdings Limited, Osaka-shi, Osaka 530-8203 (JP)
(72) Inventor: TSUCHIYA Yuko, Kawasaki-shi, Kanagawa 211-0067 (JP); YAMASHITA Jumpei, Kawasaki-shi, Kanagawa 211-0067 (JP); YOKOO Yoshiaki, Kawasaki-shi, Kanagawa 211-0067 (JP); OHKURI Tadahiro, Kawasaki-shi, Kanagawa 211-0067 (JP); NAGAO Koji, Kawasaki-shi, Kanagawa 211-0067 (JP); SOGUCHI Akira, Kawasaki-shi, Kanagawa 211-0067 (JP)
(74) Representative: Grünecker Patent- und Rechtsanwälte PartG mbB
(86) International application number: PCT/JP2023/026246
(87) International publication number: WO 2024/019043

(57) **Abstract**

Provided is a novel beverage containing a steviol glycoside and an alcohol. One embodiment of the present invention provides a beverage that contains one or more steviol glycosides selected from the group consisting of rebaudioside A, rebaudioside D and rebaudioside M and has an alcohol content of 0.05 v/v% or more and less than 0.5 v/v%.

## Description

### Technical Field

The present invention relates to a beverage or the like containing a steviol glycoside and an alcohol. The present invention also relates to a method for producing the beverage, a concentrate (e.g., a concentrated liquid) for preparing the beverage, and a method for improving the taste quality of a steviol glycoside-containing beverage.

### Background Art

Due to an increase in health awareness in recent years, low-calorie products using a high-intensity sweetener such as aspartame, stevia, acesulfame K, or sucralose have been increasing and actively developed.

JP 2010-508824 T (Patent Document 1) discloses a sweetener composition containing a preservative, a high-intensity sweetener, and a sweetness improving composition, and a method for producing the sweetener composition. Also, it discloses a sweetener-containing edible composition containing an edible material, a preservative, a high-intensity sweetener, and a sweetness improving composition, and indicates, as examples of such a sweetener-containing edible composition, foods, beverages, pharmaceuticals, tobacco, functional foods, oral hygiene products, or cosmetics.

WO 2021/099773 (Patent Document 2) discloses a composition containing rebaudioside M and 1,3-propanediol and a method for producing the composition. Also, it describes that the composition can be used as a sweetener for foods and beverages.

### Citation List

### Patent Document

Patent Document 1: JP 2010-508824 T
Patent Document 2: WO 2021/099773

### Summary of Invention

### Technical Problem

Under the circumstances as described above, development of a novel beverage containing a steviol glycoside and an alcohol is awaited.

### Solution to Problem

The present inventors have succeeded, for the first time, in improving flavor with little alcohol feeling by adding one or more steviol glycosides selected from the group consisting of rebaudioside A, rebaudioside D, and rebaudioside M to a beverage containing a predetermined amount of alcohol. The present invention is based on such a finding.

The present invention provides a beverage, a concentrate, and a method for improving a taste quality of a steviol glycoside-containing beverage, which will be described below.
[1] A beverage containing one or more steviol glycosides selected from the group consisting of rebaudioside A, rebaudioside D, and rebaudioside M,
   the beverage having an alcohol content of 0.05 v/v% or more and less than 0.5 v/v%.
[2] The beverage according to [1], wherein a total content of the one or more steviol glycosides selected from the group consisting of rebaudioside A, rebaudioside D, and rebaudioside M is from 50 to 800 ppm.
[3] The beverage according to [1] or [2], wherein a content of rebaudioside D is from 30 to 600 ppm, from 50 to 500 ppm, or from 100 to 400 ppm.
[4] The beverage according to any of [1] to [3], wherein a content of rebaudioside M is from 30 to 600 ppm, from 50 to 550 ppm, or from 100 to 500 ppm.
[5] The beverage according to any of [1] to [4], wherein a content of rebaudioside A is from 0 to 400 ppm, from 0 to 200 ppm, or from 0 to 20 ppm.
[6] The beverage according to any of [1] to [5], further containing one or more steviol glycosides selected from the group consisting of rebaudioside B, rebaudioside C, rebaudioside E, rebaudioside F, rebaudioside I, rebaudioside J, rebaudioside K, rebaudioside N, rebaudioside O, rebaudioside Q, rebaudioside R, dulcoside A, dulcoside C, rubusoside, steviol, steviolmonoside, steviolbioside, and stevioside.
[7] The beverage according to any of [1] to [6], further containing a low-intensity sweetener.
[8] The beverage according to [7], wherein the low-intensity sweetener contains one or more sweeteners selected from glucose, sucrose, fructose, maltose, oligosaccharide, lactose, psicose, xylitol, erythritol, allose, tagatose, xylose, ribose, high-fructose corn syrup, and a combination thereof.
[9] The beverage according to any of [1] to [8], wherein the beverage has an energy of 100 Kcal/100 ml or less.
[10] The beverage according to any of [1] to [9], wherein the beverage is a sparkling beverage.
[11] The beverage according to any of [1] to [10], further containing a high-intensity sweetener other than the steviol glycoside.
[12] A 1.2 to 10-fold concentrate for providing the beverage described in any of [1] to [11].
[13] A method for improving a taste quality of a steviol glycoside-containing beverage, the method including adjusting an alcohol content of a beverage containing one or more steviol glycosides selected from the group consisting of rebaudioside A, rebaudioside D, and rebaudioside M to an amount of more than 0 v/v% and less than 0.5 v/v%.
[14] A beverage containing one or more steviol glycosides selected from the group consisting of rebaudioside D and rebaudioside M,
   the beverage having:
      (a) a content of rebaudioside D of 0 ppm or more and less than 60 ppm, and a content of rebaudioside M of from 30 to 600 ppm, preferably from 50 to 500 ppm, and more preferably from 100 to 450 ppm,
      (b) a content of rebaudioside M of 0 ppm or more and less than 50 ppm, and a content of rebaudioside D of from 30 to 600 ppm, preferably from 50 to 500 ppm, and more preferably from 100 to 450 ppm, or
      (c) a total content of rebaudioside D and rebaudioside M of more than 0 ppm and less than 110 ppm, preferably from 10 ppm to 110 ppm, and more preferably from 30 ppm to 110 ppm, and
   an alcohol content of more than 0 v/v% and less than 0.5 v/v%.

### Advantageous Effects of Invention

According to an aspect of the present invention, there is provided a novel beverage containing a steviol glycoside and an alcohol. According to a preferred aspect of the present invention, there is provided a novel beverage containing a steviol glycoside and an alcohol, in which one or more taste qualities selected from the group consisting of sweetness intensity, thickness, miscellaneous taste, and alcohol feeling are improved. According to another aspect of the present invention, there is provided a method for improving one or more taste qualities selected from the group consisting of sweetness intensity, thickness, miscellaneous taste, and alcohol feeling of a steviol glycoside-containing beverage.

### Brief Description of Drawings

FIG. 1 is a diagram showing a radar chart of sensory evaluation results in Example A.
FIG. 2 is a diagram showing evaluation results of sweetness intensity, thickness, miscellaneous taste, alcohol feeling, and comprehensive evaluation of each sample in sensory evaluation in Example B.
FIG. 3 is a diagram showing evaluation results of sweetness intensity, thickness, miscellaneous taste, alcohol feeling, and comprehensive evaluation of each sample in sensory evaluation in Example C.
FIG. 4 is a diagram showing evaluation results of sweetness intensity, thickness, miscellaneous taste, alcohol feeling, and comprehensive evaluation of each sample in sensory evaluation in Example D.
FIG. 5 is a diagram showing a radar chart for each sample of sensory evaluation in Example D.
FIG. 6 is a diagram showing evaluation results of sweetness intensity, thickness, miscellaneous taste, and alcohol feeling of each sample in sensory evaluation in Example E.
FIG. 7 is a diagram showing a radar chart for each sample of sensory evaluation in Example E.

### Description of Embodiments

The present invention will now be described in detail. The following embodiments are examples for explaining the present invention and are not intended to limit the present invention to these embodiments only. The present invention may be implemented in various forms, without departing from the spirit of the present invention. In addition, the present specification encompasses the contents described in the specification and drawings of the Japanese patent application (Japanese Patent Application No. 2022-114738) filed on July 19, 2022, which serves as a basis for claiming priority of the present application.

As used herein, the "ppm" means "ppm by mass" unless otherwise specified. As used herein, the "rebaudioside", "Reb" and "Reb." are intended to have the same meaning and are all intended to mean "rebaudioside".

### 1. Beverage Containing Steviol Glycoside and Alcohol

The present invention provides, as an aspect, a beverage containing a steviol glycoside and an alcohol (hereinafter also referred to as "the beverage of the present invention").

According to an embodiment of the beverage of the present invention, there is provided a beverage containing one or more steviol glycosides selected from the group consisting of rebaudioside A, rebaudioside D, and rebaudioside M, the beverage having an alcohol content of 0.05 v/v% or more and less than 0.5 v/v%. According to other embodiments of the beverage of the present invention, there is provided a beverage containing one or more steviol glycosides selected from the group consisting of rebaudioside D and rebaudioside M, the beverage having: (a) a content of rebaudioside D of 0 ppm or more and less than 60 ppm, and a content of rebaudioside M of from 30 to 600 ppm; (b) a content of rebaudioside M of 0 ppm or more and less than 50 ppm, and a content of rebaudioside D of from 30 to 600 ppm, or (c) a total content of rebaudioside D and rebaudioside M is more than 0 ppm and less than 110 ppm, and an alcohol content of more than 0 v/v% and less than 0.5 v/v%.

A beverage according to a preferred embodiment of the present invention is improved in one or more taste qualities selected from the group consisting of sweetness intensity, thickness, miscellaneous taste, and alcohol feeling. The beverages according to some preferred embodiments of the present invention are improved (enhanced) at least in sweetness intensity. In addition to sweetness intensity, the beverages according to some preferred embodiments of the present invention are improved in thickness and miscellaneous taste. Furthermore, the beverage according to a preferred embodiment of the present invention contains, as a sweetener, substantially only a naturally occurring steviol glycoside, or substantially only a naturally occurring steviol glycoside and a naturally occurring low-intensity sweetener, thereby meeting consumer needs for natural products. Here, the phrase "contain, as a sweetener, substantially only a naturally occurring steviol glycoside, or substantially only a naturally occurring steviol glycoside and a naturally occurring low-intensity sweetener" means that an additional sweetener is allowed to be contained in an impurity amount or in an amount below a sweetness threshold (for example, in an amount of less than 20 ppm). The beverages according to other preferred embodiments of the present invention contain a steviol glycoside, and thus can eliminate or reduce the use of a high-calorie sweetener such as sugar or high-fructose corn syrup, thereby reducing calories.

### Steviol Glycoside

The steviol glycoside is a sweet substance having, as a skeleton, steviol which is a type of diterpenoid contained in leaves of Stevia rebaudiana belonging to the Asteraceae family. Many steviol glycosides have a sweetness that is several tens to several hundreds of times that of sugar, and thus are used in the food and drink industry as calorie-free sweeteners. In leaves of known stevia plants, stevioside in which three glucose molecules are bound to a steviol skeleton is contained in the largest amount, and rebaudioside A (or Reb A) in which four glucose molecules are bound to a steviol skeleton is contained in the second largest amount. On the other hand, rebaudioside D and rebaudioside M having a structure in which five and six glucose molecules are bonded, respectively, are contained only in trace amounts in the leaves of known stevia plants.

In the present invention, one or more steviol glycosides selected from the group consisting of rebaudioside A, rebaudioside D, and rebaudioside M are used as the steviol glycoside. The present inventors have found that a beverage containing rebaudioside A, rebaudioside D, and/or rebaudioside M and a predetermined amount of an alcohol provides an unexpected effect, and have arrived at the present invention. Rebaudioside A, rebaudioside D, and rebaudioside M used in the present invention may be directly extracted from stevia or may be produced by chemically or biochemically adding glucose to a compound having another structure and contained in a stevia extract.

In the present invention, the total content of the one or more steviol glycosides selected from the group consisting of rebaudioside A, rebaudioside D, and rebaudioside M is not particularly limited, and the total content of these steviol glycosides in the beverages according to some embodiments of the present invention is from 50 to 800 ppm. In other embodiments of the present invention, the total content of the one or more steviol glycosides selected from the group consisting of rebaudioside A, rebaudioside D, and rebaudioside M in the beverage may be from 30 to 800 ppm, from 30 to 700 ppm, from 30 to 600 ppm, from 30 to 500 ppm, from 30 to 450 ppm, from 30 to 400 ppm, from 30 to 300 ppm, from 30 to 200 ppm, from 30 to 100 ppm, from 50 to 700 ppm, from 50 to 600 ppm, from 50 to 500 ppm, from 50 to 450 ppm, from 50 to 400 ppm, from 50 to 300 ppm, from 50 to 200 ppm, from 100 to 800 ppm, from 100 to 700 ppm, from 100 to 600 ppm, from 100 to 500 ppm, from 100 to 450 ppm, from 100 to 400 ppm, from 100 to 300 ppm, from 100 to 200 ppm, from 150 to 800 ppm, from 150 to 700 ppm, from 150 to 600 ppm, from 150 to 500 ppm, from 150 to 450 ppm, from 150 to 400 ppm, from 150 to 300 ppm, from 150 to 200 ppm, from 200 to 800 ppm, from 200 to 700 ppm, from 200 to 600 ppm, from 200 to 500 ppm, from 200 to 450 ppm, from 200 to 400 ppm, from 200 to 300 ppm, from 250 to 800 ppm, from 250 to 700 ppm, from 250 to 600 ppm, from 250 to 500 ppm, from 250 to 450 ppm, from 250 to 400 ppm, from 250 to 300 ppm, from 300 to 800 ppm, from 300 to 700 ppm, from 300 to 600 ppm, from 300 to 500 ppm, from 300 to 450 ppm, or from 300 to 400 ppm. The total content is preferably from 50 to 700 ppm, more preferably from 50 to 500 ppm, and even more preferably from 100 to 450 ppm. Contents of the steviol glycosides in the beverage may be calculated from amounts of raw materials added, or may be measured using a known analysis method such as liquid chromatography.

According to some embodiments of the present invention, the content of rebaudioside A in the beverage may be from 0 to 800 ppm, from 0 to 700 ppm, from 0 to 600 ppm, from 0 to 500 ppm, from 0 to 400 ppm, from 0 to 300 ppm, from 0 to 200 ppm, from 0 to 100 ppm, from 0 to 90 ppm, from 0 to 80 ppm, from 0 to 70 ppm, from 0 to 60 ppm, from 0 to 50 ppm, from 0 to 40 ppm, from 0 to 30 ppm, from 0 to 20 ppm, from 0 to 10 ppm, from 0 to 5 ppm, from 30 to 800 ppm, from 30 to 700 ppm, from 30 to 600 ppm, from 30 to 500 ppm, from 30 to 450 ppm, from 30 to 400 ppm, from 30 to 300 ppm, from 30 to 200 ppm, from 30 to 100 ppm, from 50 to 700 ppm, from 50 to 600 ppm, from 50 to 500 ppm, from 50 to 450 ppm, from 50 to 400 ppm, from 50 to 300 ppm, from 50 to 200 ppm, from 100 to 800 ppm, from 100 to 700 ppm, from 100 to 600 ppm, from 100 to 500 ppm, from 100 to 450 ppm, from 100 to 400 ppm, from 100 to 300 ppm, from 100 to 200 ppm, from 150 to 800 ppm, from 150 to 700 ppm, from 150 to 600 ppm, from 150 to 500 ppm, from 150 to 450 ppm, from 150 to 400 ppm, from 150 to 300 ppm, from 150 to 200 ppm, from 200 to 800 ppm, from 200 to 700 ppm, from 200 to 600 ppm, from 200 to 500 ppm, from 200 to 450 ppm, from 200 to 400 ppm, from 200 to 300 ppm, from 250 to 800 ppm, from 250 to 700 ppm, from 250 to 600 ppm, from 250 to 500 ppm, from 250 to 450 ppm, from 250 to 400 ppm, from 250 to 300 ppm, from 300 to 800 ppm, from 300 to 700 ppm, from 300 to 600 ppm, from 300 to 500 ppm, from 300 to 450 ppm, or from 300 to 400 ppm. The content of rebaudioside A is preferably from 50 to 700 ppm, more preferably from 50 to 500 ppm, and even more preferably from 100 to 450 ppm. In other preferred embodiments, the content of rebaudioside A is from 0 to 50 ppm, from 0 to 30 ppm, from 0 to 20 ppm, or from 0 to 10 ppm. The content of rebaudioside A in the beverage may be calculated from amounts of raw materials added, or may be measured using a known analysis method such as liquid chromatography.

According to some embodiments of the present invention, the content of rebaudioside D in the beverage may be from 0 to 800 ppm, from 0 to 700 ppm, from 0 to 600 ppm, from 0 to 500 ppm, from 0 to 400 ppm, from 0 to 300 ppm, from 0 to 200 ppm, from 0 to 100 ppm, from 0 to 90 ppm, from 0 to 80 ppm, from 0 to 70 ppm, from 0 to 60 ppm, 0 ppm or more and less than 60 ppm, from 0 to 50 ppm, from 0 to 40 ppm, from 0 to 30 ppm, from 0 to 20 ppm, from 0 to 10 ppm, from 0 to 5 ppm, from 30 to 800 ppm, from 30 to 700 ppm, from 30 to 600 ppm, from 30 to 500 ppm, from 30 to 450 ppm, from 30 to 400 ppm, from 30 to 300 ppm, from 30 to 200 ppm, from 30 to 100 ppm, from 50 to 700 ppm, from 50 to 600 ppm, from 50 to 500 ppm, from 50 to 450 ppm, from 50 to 400 ppm, from 50 to 300 ppm, from 50 to 200 ppm, from 100 to 800 ppm, from 100 to 700 ppm, from 100 to 600 ppm, from 100 to 500 ppm, from 100 to 450 ppm, from 100 to 400 ppm, from 100 to 300 ppm, from 100 to 200 ppm, from 150 to 800 ppm, from 150 to 700 ppm, from 150 to 600 ppm, from 150 to 500 ppm, from 150 to 450 ppm, from 150 to 400 ppm, from 150 to 300 ppm, from 150 to 200 ppm, from 200 to 800 ppm, from 200 to 700 ppm, from 200 to 600 ppm, from 200 to 500 ppm, from 200 to 450 ppm, from 200 to 400 ppm, from 200 to 300 ppm, from 250 to 800 ppm, from 250 to 700 ppm, from 250 to 600 ppm, from 250 to 500 ppm, from 250 to 450 ppm, from 250 to 400 ppm, from 250 to 300 ppm, from 300 to 800 ppm, from 300 to 700 ppm, from 300 to 600 ppm, from 300 to 500 ppm, from 300 to 450 ppm, or from 300 to 400 ppm. The content of rebaudioside D is preferably from 50 to 700 ppm, more preferably from 50 to 500 ppm, and even more preferably from 100 to 450 ppm. In other preferred embodiments, the content of rebaudioside D is from 0 to 50 ppm, from 0 to 30 ppm, from 0 to 20 ppm, or from 0 to 10 ppm. The content of rebaudioside D in the beverage may be calculated from amounts of raw materials added, or may be measured using a known analysis method such as liquid chromatography.

According to some embodiments of the present invention, the content of rebaudioside M in the beverage may be from 0 to 800 ppm, from 0 to 700 ppm, from 0 to 600 ppm, from 0 to 500 ppm, from 0 to 400 ppm, from 0 to 300 ppm, from 0 to 200 ppm, from 0 to 100 ppm, from 0 to 90 ppm, from 0 to 80 ppm, from 0 to 70 ppm, from 0 to 60 ppm, from 0 to 50 ppm, 0 ppm or more and less than 50 ppm, from 0 to 40 ppm, from 0 to 30 ppm, from 0 to 20 ppm, from 0 to 10 ppm, from 0 to 5 ppm, from 30 to 800 ppm, from 30 to 700 ppm, from 30 to 600 ppm, from 30 to 500 ppm, from 30 to 450 ppm, from 30 to 400 ppm, from 30 to 300 ppm, from 30 to 200 ppm, from 30 to 100 ppm, from 50 to 700 ppm, from 50 to 600 ppm, from 50 to 500 ppm, from 50 to 450 ppm, from 50 to 400 ppm, from 50 to 300 ppm, from 50 to 200 ppm, from 100 to 800 ppm, from 100 to 700 ppm, from 100 to 600 ppm, from 100 to 500 ppm, from 100 to 450 ppm, from 100 to 400 ppm, from 100 to 300 ppm, from 100 to 200 ppm, from 150 to 800 ppm, from 150 to 700 ppm, from 150 to 600 ppm, from 150 to 500 ppm, from 150 to 450 ppm, from 150 to 400 ppm, from 150 to 300 ppm, from 150 to 200 ppm, from 200 to 800 ppm, from 200 to 700 ppm, from 200 to 600 ppm, from 200 to 500 ppm, from 200 to 450 ppm, from 200 to 400 ppm, from 200 to 300 ppm, from 250 to 800 ppm, from 250 to 700 ppm, from 250 to 600 ppm, from 250 to 500 ppm, from 250 to 450 ppm, from 250 to 400 ppm, from 250 to 300 ppm, from 300 to 800 ppm, from 300 to 700 ppm, from 300 to 600 ppm, from 300 to 500 ppm, from 300 to 450 ppm, or from 300 to 400 ppm. The content of rebaudioside M is preferably from 50 to 700 ppm, more preferably from 50 to 500 ppm, and even more preferably from 100 to 450 ppm. In other preferred embodiments, the content of rebaudioside M is from 0 to 50 ppm, from 0 to 30 ppm, from 0 to 20 ppm, or from 0 to 10 ppm. The content of rebaudioside M in the beverage may be calculated from amounts of raw materials added, or may be measured using a known analysis method such as liquid chromatography.

According to some embodiments of the present invention, a total content of rebaudioside D and rebaudioside M in the beverage may be from 100 to 700 ppm, from 100 to 500 ppm, or from 100 to 450 ppm, and the content of rebaudioside A may be 50 ppm or less, 40 ppm or less, 30 ppm or less, 20 ppm or less, or 10 ppm or less. By increasing the content of rebaudioside D and/or rebaudioside M, which are superior in taste quality to rebaudioside A, an improvement in taste quality of the beverage as a whole can be expected. In a preferred aspect of the present invention, not only the sweetness intensity, but also the thickness and the miscellaneous taste are improved due to the beverage containing one or both of rebaudioside D and rebaudioside M. In some other embodiments of the invention, the total content of rebaudioside D and rebaudioside M in the beverage is more than 0 ppm and less than 110 ppm. In some other embodiments of the present invention, the total content of rebaudioside D and rebaudioside M in the beverage may be from 10 to 100 ppm, from 30 to 100 ppm, from 50 to 100 ppm, from 10 to 80 ppm, from 30 to 80 ppm, or from 50 to 80 ppm.

The beverages according to some embodiments of the present invention may contain a steviol glycoside other than the one or more steviol glycosides selected from the group consisting of rebaudioside A, rebaudioside D, and rebaudioside M as long as the effects of the present invention are not impaired. As such steviol glycosides, the beverages may further contain one or more steviol glycosides selected from the group consisting of rebaudioside B, rebaudioside C, rebaudioside E, rebaudioside F, rebaudioside I, rebaudioside J, rebaudioside K, rebaudioside N, rebaudioside O, rebaudioside Q, rebaudioside R, dulcoside A, dulcoside C, rubusoside, steviol, steviolmonoside, steviolbioside, and stevioside.

When additional steviol glycosides are contained, a composition ratio of the total amount of the one or more steviol glycosides selected from the group consisting of rebaudioside A, rebaudioside D, and rebaudioside M to a total amount of such additional steviol glycosides may be from 99:1 to 50:50, from 95:5 to 55:45, from 90:10 to 60:40, from 85:15 to 65:35, from 80:20 to 70:30, from 80:20 to 75:25, from 99:1 to 85:5, from 98:2 to 86:14, from 97:3 to 87:13, from 96:4 to 88:12, or from 95:5 to 89:11 in mass ratio.

### Alcohol

The beverages in some embodiments of the present invention contain an alcohol. As used herein, the alcohol means ethyl alcohol (ethanol) unless otherwise noted. The beverages in some embodiments of the present invention contain an alcohol in an amount of 0.05 v/v% or more and less than 0.5 v/v%. The beverages in other embodiments of the invention contain an alcohol in an amount of more than 0 v/v% and less than 0.5 v/v%. As used herein, the alcohol content is expressed by percentage on a volume/volume basis (v/v%). The alcohol content of the beverage can be measured by a method specified by the Japanese Regional Taxation Bureau. For example, it can be measured by using a vibration densitometer. Specifically, the alcohol content can be determined by preparing a sample from the beverage by removing carbon dioxide gas through filtration or with ultrasonication, distilling the sample, measuring the density of the resulting distillate at 15°C, and converting the density using "Table 2. Conversion Table of Alcohol Content, Density (15°C), and Specific Gravity (15/15°C)", which is an attached table of the Official Analysis Method of the National Tax Agency (H19 National Tax Agency Order No. 6, revised on June 22, 2007). Alternatively, when the alcoholic strength of the liquor used is known, it can be calculated from the alcoholic strength thereof and the amount thereof added.

An alcohol component to be used in the beverages in some embodiments of the present invention is not particularly limited. Any raw material may be used as long as it is a drinkable alcohol component such as a spirit, a liqueur, shochu, whiskey, brandy, a raw material alcohol (e.g., a neutral spirit), a Japanese plum liqueur, a fruit liquor, or a sweet fruit liquor. The alcohol may be obtained by fermentation or by chemical synthesis. Alternatively, the alcohol originally contained in the raw material to be used may be used as it is, or the alcohol content may be adjusted to a predetermined alcohol content by removing a part of the alcohol originally contained in the raw material to be used. Alternatively, after preparation of a beverage precursor, the alcohol may be produced by fermenting the precursor.

In some embodiments of the present invention, the alcohol content of the beverage is 0.05 v/v% or more and less than 0.5 v/v%. In other embodiments of the present invention, the alcohol content of the beverage may be more than 0 v/v% and less than 0.5 v/v%, from 0.01 to 0.49 v/v%, from 0.03 to 0.49 v/v%, from 0.05 to 0.49 v/v%, from 0.07 to 0.49 v/v%, from 0.1 to 0.49 v/v%, from 0.15 to 0.49 v/v%, from 0.2 to 0.49 v/v%, from 0.25 to 0.49 v/v%, from 0.3 to 0.49 v/v%, from 0.35 to 0.49 v/v%, from 0.4 to 0.49 v/v%, from 0.45 to 0.49 v/v%, from 0.01 to 0.45 v/v%, from 0.03 to 0.45 v/v%, from 0.05 to 0.45 v/v%, from 0.07 to 0.45 v/v%, from 0.1 to 0.45 v/v%, from 0.15 to 0.45 v/v%, from 0.2 to 0.45 v/v%, from 0.25 to 0.45 v/v%, from 0.3 to 0.45 v/v%, from 0.35 to 0.45 v/v%, from 0.4 to 0.45 v/v%, from 0.01 to 0.4 v/v%, from 0.03 to 0.4 v/v%, from 0.05 to 0.4 v/v%, from 0.07 to 0.4 v/v%, from 0.1 to 0.4 v/v%, from 0.15 to 0.4 v/v%, from 0.2 to 0.4 v/v%, from 0.25 to 0.4 v/v%, from 0.3 to 0.4 v/v%, from 0.35 to 0.4 v/v%, from 0.01 to 0.35 v/v%, from 0.03 to 0.35 v/v%, from 0.05 to 0.35 v/v%, from 0.07 to 0.35 v/v%, from 0.1 to 0.35 v/v%, from 0.15 to 0.35 v/v%, from 0.2 to 0.35 v/v%, from 0.25 to 0.35 v/v%, from 0.3 to 0.35 v/v%, from 0.01 to 0.3 v/v%, from 0.03 to 0.3 v/v%, from 0.05 to 0.3 v/v%, from 0.07 to 0.3 v/v%, from 0.1 to 0.3 v/v%, from 0.15 to 0.3 v/v%, from 0.2 to 0.3 v/v%, or from 0.25 to 0.3 v/v%. The alcohol content is preferably from 0.05 to 0.45 v/v%, more preferably from 0.07 to 0.4 v/v%, and even more preferably from 0.1 to 0.4 v/v%.

The beverages in some embodiments of the invention are non-alcoholic beverages. Non-alcoholic beverage standards vary from country to country. In Japan, beverages with an alcohol content of 1 percent by volume or more are defined as "liquor" (Article 2 (1) of the Liquor Tax Act). In many countries, beverages having an alcohol content of less than 0.5 v/v% are treated as non-alcoholic beverage. Thus, the alcohol content of non-alcoholic beverages in some embodiments of the invention is less than 0.5 v/v%.

### Type of Beverage

The beverages in some embodiments of the present invention may be sparkling beverages. As used herein, the "sparkling beverage" is a beverage from which foam is generated, and includes, for example, a beverage in which a foam layer is formed on its liquid surface when the beverage is poured into a container. Examples of the sparkling beverage include carbonated beverages. The carbonated beverage is a beverage containing carbon dioxide gas, and examples of such a beverage containing carbon dioxide gas include a beverage obtained by separately injecting carbon dioxide gas into a beverage, a beverage obtained by using carbonated water as a raw material, and a beverage in which carbon dioxide gas is generated by fermenting a part of a raw material. A gas pressure of the sparkling beverage is not particularly limited, and can be from 0.5 to 5.0 kgf/cm², from 0.5 to 4.5 kgf/cm², from 0.5 to 4.0 kgf/cm², from 0.5 to 3.5 kgf/cm², from 0.5 to 3.0 kgf/cm², from 0.5 to 2.5 kgf/cm², from 0.5 to 2.0 kgf/cm², from 0.5 to 1.5 kgf/cm², from 1.0 to 5.0 kgf/cm², from 1.0 to 4.5 kgf/cm², from 1.0 to 4.0 kgf/cm², from 1.0 to 3.5 kgf/cm², from 1.0 to 3.0 kgf/cm², from 1.0 to 2.5 kgf/cm², from 1.0 to 2.0 kgf/cm², from 1.0 to 1.5 kgf/cm², from 1.5 to 5.0 kgf/cm², from 1.5 to 4.5 kgf/cm², from 1.5 to 4.0 kgf/cm², from 1.5 to 3.5 kgf/cm², from 1.5 to 3.0 kgf/cm², from 1.5 to 2.5 kgf/cm², from 1.5 to 2.0 kgf/cm², from 2.0 to 5.0 kgf/cm², from 2.0 to 4.5 kgf/cm², from 2.0 to 4.0 kgf/cm², from 2.0 to 3.5 kgf/cm², from 2.0 to 3.0 kgf/cm², from 2.0 to 2.5 kgf/cm², from 2.2 to 4.0 kgf/cm², from 2.2 to 3.5 kgf/cm², from 2.2 to 3.3 kgf/cm², from 2.2 to 3.2 kgf/cm², from 2.3 to 4.0 kgf/cm², from 2.3 to 3.5 kgf/cm², from 2.3 to 3.2 kgf/cm², from 3.0 to 4.0 kgf/cm², from 3.0 to 3.5 kgf/cm², from 1. 1 to 2.4 kgf/cm², from 1.2 to 2.3 kgf/cm², from 1.3 to 2.2 kgf/cm², or from 1.4 to 2.1 kgf/cm². The content of the gas in the sparkling beverage can be defined by the gas pressure. As used herein, the "gas pressure" refers to a gas pressure of carbon dioxide gas in the sparkling beverage in a container unless otherwise specified. The gas pressure can be measured by fixing a beverage having a liquid temperature of 20°C to a gas internal pressure meter, once opening a stopcock of the gas internal pressure meter to release the carbon dioxide gas in a head space to the atmosphere, then closing the stopcock again, shaking the gas internal pressure meter, and reading a value when a pointer reaches a certain position. As used herein, the gas pressure of the sparkling beverage is measured using this method, unless otherwise specified.

In some embodiments of the present invention, the beverage is not particularly limited. In some embodiments of the present invention, the beverage may be, for example, a non-alcoholic beer, a malt beverage, a lactic acid bacterium beverage, a fermented beverage, a cocoa beverage, a sports drink, a nutritional supplement drink, a tea-based beverage (e.g., a tea beverage such as green tea, oolong tea, green tea with roasted rice, or black tea, or a tea beverage produced from plants other than tea plant, such as barley tea, adlay tea, sesame barley tea, buckwheat tea, cherry blossom tea, hydrangea tea, or herbal tea), a soft drink, a coffee beverage (packaged coffee, liquid coffee, or the like), a carbonated beverage (e.g., a cola flavored beverage, a transparent carbonated beverage, a ginger ale, a fruit juice-based carbonated beverage, a milk-containing carbonated beverage or a sugarless carbonated beverage), a functional beverage (e.g., a sports drink, an energy drink, a health support drink, or a pouch jelly drink), a fruit-vegetable beverage (e.g., a 100% fruit juice beverage, a fruit-containing beverage, a low fruit juice-containing soft drink, a berry-containing fruit beverage, or a pulp beverage), a milky beverage (e.g., cow milk, a drink yogurt, a lactic acid bacterium beverage, or a milk-containing soft drink), a soymilk beverage (e.g., soy milk or a soybean beverage), or flavored water.

In some embodiments of the present invention, a form of the beverage is not limited and may be, for example, a form of a packaged beverage in which the beverage is enclosed and packaged in a container, such as a can, a bottle, a PET bottle, a pouch, a paper pack, and a plastic container. In the case of performing heat sterilization after packaging, the type thereof is not particularly limited, and the heat sterilization can be performed using, for example, a common method, such as UHT sterilization and retort sterilization. A temperature of the heat sterilization process is not particularly limited and is, for example, from 65 to 130°C and preferably from 85 to 120°C for 10 to 40 minutes. However, if a sterilization value equivalent to that in the above conditions is obtained, a sterilization at an appropriate temperature for several seconds, for example, from 5 to 30 seconds, is also acceptable.

### Sweetness Intensity

As used herein, the "sweetness intensity" refers to intensity of sweetness exhibited by a substance. For example, when the sweetness intensity exhibited by sucrose per unit concentration Brix is defined as a sweetness degree of 1, rebaudioside A, rebaudioside D, and rebaudioside M all have a sweetness around from 200 to 300 times (for example, about 225 times). A numerical value obtained by multiplying these sweetness degrees by the concentration (w/v% (which can be regarded as w/w% in the case of a beverage)) of the sweetener in the beverage of the present invention is the sweetness intensity of the beverage of the present invention. When the sweetness intensity is calculated in the present invention, in the case of high-intensity sweeteners having a wide range of sweetness degrees, a central value thereof is used unless otherwise specified. In addition, the sweetness intensity of the beverage of the present invention does not need to be derived only from rebaudioside A, rebaudioside D and/or rebaudioside M. In the case where the beverage contains an optional sweetener, the sweetness intensity is a total value of the sweetness intensities derived from these sweeteners and the optional sweetener. Note that relative ratios of sweetnesses of other sweeteners to the sweetness of sucrose of 1 can be determined from a known sugar sweetness conversion table (for example, Beverage Japan, Inc., "Beverage Terminological Dictionary", literature p. 11) or the like. For example, when the sweetness degree of sucrose is 1, glucose has a sweetness degree of about from 0.6 to 0.7, fructose has a sweetness degree of about from 1.3 to 1.7, maltose has a sweetness degree of about 0.4, fructooligosaccharide has a sweetness degree of about 0.6, maltooligosaccharide has a sweetness degree of about 0.3, isomaltooligosaccharide has a sweetness degree of about from 0.4 to 0.5, galactooligosaccharide has a sweetness degree of about 0.7, lactose has a sweetness degree of about from 0.2 to 0.3, psicose has a sweetness degree of about 0.7, allose has a sweetness degree of about 0.8, tagatose has a sweetness degree of about 0.9, and high-fructose corn syrup has a sweetness degree of about 0.75.

The sweetness intensity of the beverages according to some aspects of the present invention varies depending on specific beverages, and is preferably approximately from 0.1 to 20. For example, the sweetness intensity may be from 0.1 to 18, from 0.1 to 15, from 0.5 to 14.5, from 1.0 to 14.0, from 1.5 to 13.5, from 2.0 to 13.0, from 2.5 to 12.5, from 3.0 to 12.0, from 3.5 to 11.5, from 4.0 to 11.0, from 4.5 to 10.5, from 5.5 to 10.0, from 6.0 to 9.5, from 6.5 to 9.0, from 7.0 to 8.5, from 7.5 to 8.0, from 4.5 to 12.5, from 4.5 to 10.0, from 4.5 to 7.5, from 5.5 to 12.5, from 5.5 to 10.0, from 5.5 to 7.5, from 6.5 to 12.5, from 6.5 to 10.0, or from 6.5 to 7.5.

### Optional and Additional Sweetener

### Low-Intensity Sweetener

The beverages in some embodiments of the present invention may further contain a low-intensity sweetener as long as the effects of the present invention are not impaired. As used herein, the low-intensity sweetener means a sweetener having a sweetness degree equivalent to or lower than that of sucrose. For example, the low-intensity sweetener exhibits a sweetness being 0.1 times or more and less than 5 times, less than 3 times, less than 2 times, less than 1.5 times, less than 1.0 times, less than 0.8 times, less than 0.7 times, less than 0.6 times, less than 0.5 times, or less than 0.4 times that of sucrose in the same amount as sucrose. Examples of the low-intensity sweetener that can be used in the present invention include a sweetener selected from glucose, sucrose, fructose, maltose, oligosaccharides, lactose, psicose, xylitol, erythritol, allose, tagatose, xylose, ribose, high-fructose corn syrup, and a combination thereof. A beverage in a preferred embodiment of the present invention contains glucose, fructose, sucrose, high-fructose corn syrup, or a rare sugar (such as psicose (allulose), xylitol, and erythritol).

Since the low-intensity sweetener such as sucrose or high-fructose corn syrup often used in a beverage or the like has a high energy, the energy (calorie) of the beverage can be greatly reduced by reducing the content of the low-intensity sweetener. In some embodiments of the present invention, a low energy (i.e., low calorie) is achieved by suppressing the concentration of the low-intensity sweetener to a low level, while sufficient sweetness is perceived upon intake due to the combination of the low-intensity sweetener and rebaudioside A, rebaudioside D and/or rebaudioside M. Thus, the content of the low-intensity sweetener is preferably an amount that provides 100 Kcal/100 ml or less of energy. The energy of the beverages in some embodiments of the present invention can be from 0 to 100 Kcal/100 ml (100 Kcal/100 ml or less), from 0 to 95 Kcal/100 ml, from 0 to 90 Kcal/100 ml, from 0 to 85 Kcal/100 ml, from 0 to 80 Kcal/100 ml, from 0 to 75 Kcal/100 ml, from 0 to 70 Kcal/100 ml, from 0 to 65 Kcal/100 ml, from 0 to 60 Kcal/100 ml, from 0 to 55 Kcal/100 ml, from 0 to 50 Kcal/100 ml, from 0 to 45 Kcal/100 ml, from 0 to 40 Kcal/100 ml, from 0 to 35 Kcal/100 ml, from 0 to 30 Kcal/100 ml, from 0 to 25 Kcal/100 ml, from 0 to 20 Kcal/100 ml, from 0 to 15 Kcal/100 ml, from 0 to 10 Kcal/100 ml, from 0 to 5 Kcal/100 ml, from 5 to 90 Kcal/100 ml, from 5 to 80 Kcal/100 ml, from 5 to 70 Kcal/100 ml, from 5 to 60 Kcal/100 ml, from 5 to 55 Kcal/100 ml, from 5 to 50 Kcal/100 ml, from 5 to 45 Kcal/100 ml, from 5 to 40 Kcal/100 ml, from 5 to 35 Kcal/100 ml, from 5 to 30 Kcal/100 ml, from 5 to 25 Kcal/100 ml, from 5 to 20 Kcal/100 ml, from 5 to 15 Kcal/100 ml, from 5 to 10 Kcal/100 ml, from 10 to 90 Kcal/100 ml, from 10 to 80 Kcal/100 ml, from 10 to 70 Kcal/100 ml, from 10 to 60 Kcal/100 ml, from 10 to 55 Kcal/100 ml, from 10 to 50 Kcal/100 ml, from 10 to 45 Kcal/100 ml, from 10 to 40 Kcal/100 ml, from 10 to 35 Kcal/100 ml, from 10 to 30 Kcal/100 ml, from 10 to 25 Kcal/100 ml, from 10 to 20 Kcal/100 ml, from 10 to 15 Kcal/100 ml, from 15 to 90 Kcal/100 ml, from 15 to 80 Kcal/100 ml, from 15 to 70 Kcal/100 ml, from 15 to 60 Kcal/100 ml, from 15 to 55 Kcal/100 ml, from 15 to 50 Kcal/100 ml, from 15 to 45 Kcal/100 ml, from 15 to 40 Kcal/100 ml, from 15 to 35 Kcal/100 ml, from 15 to 30 Kcal/100 ml, from 15 to 25 Kcal/100 ml, from 15 to 20 Kcal/100 ml, from 20 to 90 Kcal/100 ml, from 20 to 80 Kcal/100 ml, from 20 to 70 Kcal/100 ml, from 20 to 60 Kcal/100 ml, from 20 to 55 Kcal/100 ml, from 20 to 50 Kcal/100 ml, from 20 to 45 Kcal/100 ml, from 20 to 40 Kcal/100 ml, from 20 to 35 Kcal/100 ml, from 20 to 30 Kcal/100 ml, from 20 to 25 Kcal/100 ml, from 25 to 90 Kcal/100 ml, from 25 to 80 Kcal/100 ml, from 25 to 70 Kcal/100 ml, from 25 to 60 Kcal/100 ml, from 25 to 55 Kcal/100 ml, from 25 to 50 Kcal/100 ml, from 25 to 45 Kcal/100 ml, from 25 to 40 Kcal/100 ml, from 25 to 35 Kcal/100 ml, or from 25 to 30 Kcal/100 ml, depending on embodiments. The energy of the sweet substance or alcohol is known, or can be determined by measuring the content with HPLC or the like and multiplying it by an energy conversion factor, or by measuring physical combustion heat by using a calorimeter (for example, a bomb calorimeter or the like) and correcting the value with a digestibility coefficient, an amount of heat excreted, or the like.

### High-Intensity Sweetener

The beverages in some embodiments of the present invention may further contain a high-intensity sweetener other than the steviol glycoside described above as long as the effects of the present invention are not impaired. As used herein, the "high-intensity sweetener" refers to a compound that has a stronger sweetness than that of sucrose, and may be a naturally occurring compound, a synthetic compound, or a combination of naturally occurring and synthetic compounds. The high-intensity sweetener exhibits a sweetness being, for example, 5 times or more, 10 times or more, 50 times or more, 100 times or more, 500 times or more, 1000 times or more, 5000 times or more, 10000 times or more, 50000 times or more, or 100000 times or more that of sucrose in the same amount as sucrose. The steviol glycoside described above is also one of high-intensity sweeteners.

Specific examples of the high-intensity sweetener include peptide-based sweeteners such as aspartame, neotame, and advantame; sucrose derivatives such as sucralose; synthetic sweeteners (including sweeteners also naturally occurring, but mainly distributed in the form of synthetic products, such as neohesperidin dihydrochalcone) such as acesulfame potassium (acesulfame K), saccharin, saccharin sodium, sodium cyclamate, dulcin, disodium glycyrrhizinate, trisodium glycyrrhizinate, and neohesperidin dihydrochalcone; sweeteners extracted from plants, such as thaumatin, monellin, curculin, mabinlin, brazzein, pentadin, hernandulcin, 4β-hydroxyhernandulcin, miracullin, glycyrrhizin, rubusoside, and phyllodulcin; plant extracts containing a high-intensity sweetener component: Siraitia grosvenorii (luo han guo) extract, Glycyrrhiza glabra extract, Rubus suavissimus S. Lee (sugar tea) extract, Hydrangea macrophylla var. thunbergii (Japanese sweet tea) extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana extract, Capparis masaikai (Mabinlang) extract, and Lippia dulcis (Aztec sweet herb) extract; and sweet components in the extracts: mogrosides (such as mogroside V and mogroside IV) obtained by treating luo han guo and luo han guo extract, glycosides obtained from plant extracts such as a phyllodulcin glycoside, a sweet component contained in Glycyrrhiza glabra plant (a triterpene glycoside such as glycyrrhizin), a sweet component contained in Rubus suavissimus S. Lee plant (a diterpene glycoside such as rubusoside), a sweet component contained in Hydrangea macrophylla var. thunbergii plant (a dihydroisocoumarin such as phyllodulcin), a sweet component contained in Sclerochiton ilicifolius plant (an amino acid such as monatin), a sweet component contained in Thaumataococcus daniellii Benth plant (a protein such as thaumatin), a sweet component contained in Dioscoreophyllum volkensii plant (a protein such as monellin), a sweet component contained in Curculigo latifolia plant (a protein such as curculin), a sweet component contained in Richadella dulcifica plant (a protein such as miracullin), a sweet component contained in Pentadiplandra brazzeana plant (proteins such as brazzein and pentadin), a sweet component contained in Capparis masaikai plant (a protein such as mabinlin), and a sweet component contained in Lippia dulcis plant (sesquiterpenes such as hernandulcin and 4β-hydroxyhernandulcin).

The beverages in other embodiments of the present invention may contain, in addition to rebaudioside A, rebaudioside D, and/or rebaudioside M, a high-intensity sweetener other than rebaudioside A, rebaudioside D, and rebaudioside M, such as a peptide-based sweetener, a sucrose derivative or a synthetic sweetener. For example, a beverage according to another embodiment of the present invention may contain one or more high-intensity sweeteners selected from acesulfame K and sucralose in addition to rebaudioside D and/or rebaudioside M. That is, a beverage according to another embodiment of the present invention may contain only acesulfame K, only sucralose, or a combination of acesulfame K and sucralose. A total content of the one or more high-intensity sweeteners selected from acesulfame K and sucralose may be from 10 to 400 ppm, for example, from 20 to 350 ppm, from 50 to 300 ppm, or from 50 to 250 ppm. When the beverages in some other embodiments of the present invention contain the one or more high-intensity sweeteners selected from acesulfame K and sucralose, a sum of sweetness intensity ratios of the one or more steviol glycosides selected from the group consisting of rebaudioside A, rebaudioside D, and rebaudioside M relative to the total sweetness intensity may be from 25 to 95%, from 30 to 95%, from 40 to 95%, from 50 to 95%, from 60 to 95%, from 70 to 95%, or from 80 to 95%. In the present specification, the sweetness intensity ratio is calculated on the assumption that the sweetness degree of acesulfame K is about 200 times that of sucrose, that the sweetness degree of aspartame is about 200 times that of sucrose, and that the sweetness degree of sucralose is about 615 times that of sucrose.

As for the content of sweeteners other than the steviol glycosides, in the case of high-intensity sweeteners (e.g., mogroside V and artificial sweeteners), a composition ratio of a total amount of rebaudioside A, rebaudioside D, and rebaudioside M to a total amount of the high-intensity sweeteners other than the steviol glycosides contained in the beverage of the present invention may be from 99:1 to 50:50, from 95:5 to 55:45, from 90:10 to 60:40, from 85:15 to 65:35, from 80:20 to 70:30, from 80:20 to 75:25, from 99:1 to 85:5, from 98:2 to 86:14, from 97:3 to 87:13, from 96:4 to 88:12, or from 95:5 to 89:11 in mass ratio. When the beverage of the present invention contains low-intensity sweeteners (e.g., sucrose, high-fructose corn syrup, and the like), a composition ratio of the total amount of rebaudioside A, rebaudioside D, and rebaudioside M to a total amount of the low-intensity sweeteners contained in the beverage may be from 1:1000 to 1:100, from 1:800 to 1:100, from 1:700 to 1:100, from 1:600 to 1:100, from 1:500 to 1:100, from 1:400 to 1:100, from 1:300 to 1:100, or from 1:200 to 1:100 in weight ratio.

### Properties and Optional and Additional Raw Material

A pH of the beverages in some embodiments of the present invention is not particularly limited and may be, for example, from 2.0 to 6.5. For example, the pH of the beverages according to some embodiments of the present invention may be from 3.0 to 4.5, from 2.6 to 3.9, from 2.7 to 3.8, from 2.8 to 3.7, from 2.9 to 3.6, or from 3.0 to 3.5.

The beverages according to some embodiments of the present invention contain water. The water is not particularly limited, and any water can be used as long as it does not adversely affect the flavor. Examples of the water include tap water, ion-exchanged water, softened water, distilled water, carbonated water, reverse osmosis water (RO water), activated carbon-treated water, ultrapure water, purified water, and demineralized water.

An antioxidant (such as sodium erythorbate), an emulsifier (such as sucrose fatty acid ester, sorbitan fatty acid ester, or polyglycerin fatty acid ester), a flavoring, or the like can be appropriately added to the beverages in some embodiments of the present invention, as long as the effects of the present invention are not impaired.

### Exemplary Embodiments of Beverage of Present Invention

In an embodiment of the present invention,
there is provided a beverage containing one or more steviol glycosides selected from the group consisting of rebaudioside D and rebaudioside M, the beverage having an alcohol content of 0.05 v/v% or more and less than 0.5 v/v%, preferably from 0.01 to 0.49 v/v%, more preferably from 0.15 to 0.45 v/v%, and even more preferably from 0.2 to 0.4 v/v%.

In an embodiment of the invention,
there is provided a beverage containing one or more steviol glycosides selected from the group consisting of rebaudioside D and rebaudioside M,
the beverage having:
   a total content of rebaudioside D and rebaudioside M of preferably from 30 to 500 ppm, more preferably from 50 to 450 ppm, and even more preferably from 100 to 400 ppm; and
   an alcohol content of 0.05 v/v% or more and less than 0.5 v/v%.

In an embodiment of the invention,
there is provided a beverage containing rebaudioside A,
the beverage having:
   a content of rebaudioside A of preferably from 30 to 500 ppm, more preferably from 50 to 450 ppm, and even more preferably from 100 to 400 ppm; and
   an alcohol content of 0.05 v/v% or more and less than 0.5 v/v%.

In an embodiment of the invention,
there is provided a beverage containing rebaudioside D,
the beverage having:
   a content of rebaudioside D of preferably from 30 to 600 ppm, more preferably from 50 to 500 ppm, and even more preferably from 100 to 400 ppm; and
   an alcohol content of 0.05 v/v% or more and less than 0.5 v/v%.

In an embodiment of the invention,
there is provided a beverage containing rebaudioside M,
the beverage having:
   a content of rebaudioside M of preferably from 30 to 600 ppm, more preferably from 50 to 550 ppm, and even more preferably from 100 to 500 ppm; and
   an alcohol content of 0.05 v/v% or more and less than 0.5 v/v%.

In an embodiment of the present invention,
there is provided a beverage containing rebaudioside D in an amount of from 100 to 400 ppm,
the beverage having an alcohol content of 0.05 v/v% or more and less than 0.5 v/v%, preferably from 0.01 to 0.49 v/v%, more preferably from 0.15 to 0.45 v/v%, and even more preferably from 0.2 to 0.4 v/v%.

In an embodiment of the present invention,
there is provided a beverage containing rebaudioside M in an amount of from 100 to 500 ppm,
the beverage having an alcohol content of 0.05 v/v% or more and less than 0.5 v/v%, preferably from 0.01 to 0.49 v/v%, more preferably from 0.15 to 0.45 v/v%, and even more preferably from 0.2 to 0.4 v/v%.

In an embodiment of the present invention,
there is provided a beverage containing one or more steviol glycosides selected from the group consisting of rebaudioside D and rebaudioside M,
the beverage having:
   (a) a content of rebaudioside D of 0 ppm or more and less than 60 ppm, and a content of rebaudioside M of from 30 to 600 ppm;
   (b) a content of rebaudioside M of 0 ppm or more and less than 50 ppm, and a content of rebaudioside D of from 30 to 600 ppm, or
   (c) a total content of rebaudioside D and rebaudioside M is more than 0 ppm and less than 110 ppm, and
an alcohol content of more than 0 v/v% and less than 0.5 v/v%. Examples of the beverage include a beverage having a content of rebaudioside D of from 0 to 50 ppm, a content of rebaudioside M of from 30 to 600 ppm, preferably from 50 to 500 ppm, and more preferably from 100 to 450 ppm, and an alcohol content of more than 0 v/v% and less than 0.5 v/v%; a beverage having a content of rebaudioside M of from 0 to 40 ppm, a content of rebaudioside D of from 30 to 600 ppm, preferably from 50 to 500 ppm, and more preferably from 100 to 450 ppm, and an alcohol content of more than 0 v/v% and less than 0.5 v/v%; and a beverage having a content of rebaudioside D of from 10 to 50 ppm, a content of rebaudioside M of from 10 to 40 ppm, and an alcohol content of more than 0 v/v% and less than 0.5 v/v%. Alternatively, examples of the beverage include a beverage having an alcohol content of from 0.01 to 0.49 v/v%, a content of rebaudioside D of from 0 to 50 ppm, and a content of rebaudioside M of from 30 to 600 ppm, preferably from 50 to 500 ppm, more preferably from 100 to 450 ppm; a beverage having an alcohol content of from 0.01 to 0.49 v/v%, a content of rebaudioside M of from 0 to 40 ppm, and a content of rebaudioside D of from 30 to 600 ppm, preferably from 50 to 500 ppm, more preferably from 100 to 450 ppm; and a beverage having an alcohol content of from 0.01 to 0.49 v/v%, a content of rebaudioside D of from 10 to 50 ppm, and a content of rebaudioside M of from 10 to 40 ppm. Alternatively, examples of the beverage include a beverage having an alcohol content of from 0.01 to 0.15 v/v%, a content of rebaudioside D of from 0 to 50 ppm, and a content of rebaudioside M of from 30 to 600 ppm, preferably from 50 to 500 ppm, more preferably from 100 to 450 ppm; a beverage having an alcohol content of from 0.01 to 0.25 v/v%, a content of rebaudioside M of from 0 to 40 ppm, and a content of rebaudioside D of from 30 to 600 ppm, preferably from 50 to 500 ppm, more preferably from 100 to 450 ppm; and a beverage having an alcohol content of from 0.01 to 0.15 v/v%, a content of rebaudioside D of from 10 to 50 ppm, and a content of rebaudioside M of from 10 to 40 ppm.

### 2. Method for Producing Beverage

As another aspect, the present invention provides a method for producing the beverage described above (hereinafter referred to as "the production method of the present invention"). The production method of the present invention is not particularly limited as long as it can provide a beverage that contains one or more steviol glycosides selected from the group consisting of rebaudioside A, rebaudioside D, and rebaudioside M and has an alcohol content of 0.05 v/v% or more and less than 0.5 v/v%. A method for producing the beverage according to another aspect of the present invention is not particularly limited as long as it can provide a beverage containing one or more steviol glycosides selected from the group consisting of rebaudioside D and rebaudioside M, the beverage having: (a) a content of rebaudioside D of 0 ppm or more and less than 60 ppm, and a content of rebaudioside M of from 30 to 600 ppm; (b) a content of rebaudioside M of 0 ppm or more and less than 50 ppm, and a content of rebaudioside D of from 30 to 600 ppm, or (c) a total content of rebaudioside D and rebaudioside M is more than 0 ppm and less than 110 ppm, and an alcohol content of more than 0 v/v% and less than 0.5 v/v%.

The production methods in some embodiments of the present invention include (a) adding one or more steviol glycosides selected from the group consisting of rebaudioside A, rebaudioside D, and rebaudioside M; (b) adding an alcohol component (e.g., spirits); and (c) optionally adding water or carbonated water. The (a) addition of steviol glycosides is performed so that the content of the steviol glycoside in the beverage as a final product achieves a desired amount. The (b) addition of an alcohol component is performed so that the alcohol content of the beverage as a final product is 0.05 v/v% or more and less than 0.5 v/v%, or more than 0 v/v% and less than 0.5 v/v%. The components may be or may not be added simultaneously. The alcohol component to be added in the above (b) is not particularly limited. Any raw material may be used as long as it is a drinkable alcohol component such as a spirit, a liqueur, shochu, whiskey, brandy, a raw material alcohol (e.g., a neutral spirit), a Japanese plum liqueur, a fruit liquor, or a sweet fruit liquor. The alcohol component to be added in the above (b) may be adjusted in alcohol content by removing a part of the alcohol originally contained in the raw material or diluting the raw material containing the alcohol. Alternatively, instead of the (b) addition of an alcohol component, after preparation of a beverage precursor, the alcohol may be produced by fermenting the precursor.

According to other embodiments of the present invention, one or more steviol glycosides selected from the group consisting of rebaudioside A, rebaudioside D, and rebaudioside M may be added to an infused liquor (for example, Japanese plum liqueur) produced by infusing a fruit such as Japanese plum in an alcohol component, or wine or cider produced by fermenting fruit juice, and diluted if necessary. Alternatively, the beverage of the present invention may be produced by diluting a concentrate which will be described below with water or carbonated water.

With respect to the production methods of some embodiments of the present invention, the "steviol glycoside", "alcohol", type of beverage", "sweetness intensity", "optional and additional sweetener", and "properties and optional and additional raw material" have the same meanings as the definitions described in the above section of "Beverage", and the numerical values thereof are the same as the numerical values described in the above section of "Beverage".

### 3. Concentrate for Providing Beverage

In another aspect, the present invention provides a concentrate for providing the beverage of the present invention (hereinafter also referred to as "the concentrate of the present invention"). According to some embodiments of the present invention, the concentrate of the present invention is a 1.2 to 10-fold concentrate for providing the beverage of the present invention, and may be, for example, a 1.2 to 9-fold, 1.5 to 9-fold, 1.8 to 9-fold, 2 to 9-fold, 2 to 8-fold, 2 to 7-fold, 2 to 6-fold, 2 to 5-fold, 2 to 4-fold, 2 to 3-fold, 3 to 10-fold, 3 to 9-fold, 3 to 8-fold, 3 to 7-fold, 3 to 6-fold, 3 to 5-fold, 3 to 4-fold, 4 to 10-fold, 4 to 9-fold, 4 to 8-fold, 4 to 7-fold, 4 to 6-fold, 4 to 5-fold, 5 to 10-fold, 5 to 9-fold, 5 to 8-fold, 5 to 7-fold, or 5 to 6-fold concentrate.

The concentrate of the present invention becomes the beverage of the present invention when diluted in a predetermined ratio. For example, the concentrate of the present invention can be used as a syrup or stock solution in a beverage. In this case, the concentrate can be used after being diluted 1.2 times, 1.5 times, 1.8 times, 2 times, 3 times, 4 times, 5 times, 6 times, 7 times, 8 times, 9 times, or 10 times. Water or carbonated water can be used for dilution. The concentrate of the present invention is concentrated, and thus is preferable in terms of storability and transportability. The concentrate of the present invention may be solid or liquid.

The concentrates according to some embodiments of the present invention contain one or more steviol glycosides selected from the group consisting of rebaudioside A, rebaudioside D, and rebaudioside M and an alcohol. The concentrates according to other embodiments of the present invention may further contain the components described in "1. Beverage Containing Steviol Glycoside and Alcohol".

The concentrates according to some embodiments of the present invention are 2-fold concentrates of the beverage of the present invention, which:
contain one or more steviol glycosides selected from the group consisting of rebaudioside A, rebaudioside D, and rebaudioside M, and
have an alcohol content of 0.1 v/v% or more and less than 1.0 v/v%.

The concentrates according to some embodiments of the present invention are 5-fold concentrates of the beverage of the present invention, which:
contain one or more steviol glycosides selected from the group consisting of rebaudioside A, rebaudioside D, and rebaudioside M, and
have an alcohol content of 0.25 v/v% or more and less than 2.5 v/v%.

The concentrates according to some embodiments of the present invention are 10-fold concentrates of the beverage of the present invention, which:
contain one or more steviol glycosides selected from the group consisting of rebaudioside A, rebaudioside D, and rebaudioside M, and
have an alcohol content of 0.5 v/v% or more and less than 5.0 v/v%.

With respect to the concentrate of an aspect of the present invention, the "steviol glycoside", "alcohol", type of beverage", "sweetness intensity", "optional and additional sweetener", and "properties and optional and additional raw material" have the same meanings as the definitions described in the above section of "Beverage".

### 4. Method for Improving Taste Quality of Steviol Glycoside-Containing Beverage

The present invention provides, as an aspect, a method for improving the taste quality of a steviol glycoside-containing beverage (hereinafter also referred to as "the taste quality improvement method of the present invention"). According to an aspect of the present invention, there is provided a method for improving the taste quality of a steviol glycoside-containing beverage, the method including adjusting an alcohol content of a beverage containing one or more steviol glycosides selected from the group consisting of rebaudioside A, rebaudioside D, and rebaudioside M to an amount of more than 0 v/v% and less than 0.5 v/v%.

In the taste quality improvement methods according to some embodiments of the present invention, an alcohol in an amount of more than 0 v/v% and less than 0.5 v/v% may be added to a steviol glycoside-containing beverage, or a steviol glycoside may be added to an alcoholic beverage. In this case, the adjustment of the alcohol content may be performed by addition of an alcohol raw material, removal of a part of alcohol contained in the alcohol raw material, or dilution of the alcohol raw material. Alternatively, a beverage containing a predetermined amount of alcohol may be provided by fermenting a beverage precursor containing the one or more steviol glycosides.

In the taste quality improvement methods according to some embodiments of the present invention, the alcohol content of the beverage may be more than 0 v/v% and less than 0.5 v/v%, from 0.01 to 0.49 v/v%, from 0.03 to 0.49 v/v%, from 0.05 to 0.49 v/v%, from 0.07 to 0.49 v/v%, from 0.1 to 0.49 v/v%, from 0.15 to 0.49 v/v%, from 0.2 to 0.49 v/v%, from 0.25 to 0.49 v/v%, from 0.3 to 0.49 v/v%, from 0.35 to 0.49 v/v%, from 0.4 to 0.49 v/v%, from 0.45 to 0.49 v/v%, from 0.01 to 0.45 v/v%, from 0.03 to 0.45 v/v%, from 0.05 to 0.45 v/v%, from 0.07 to 0.45 v/v%, from 0.1 to 0.45 v/v%, from 0.15 to 0.45 v/v%, from 0.2 to 0.45 v/v%, from 0.25 to 0.45 v/v%, from 0.3 to 0.45 v/v%, from 0.35 to 0.45 v/v%, from 0.4 to 0.45 v/v%, from 0.01 to 0.4 v/v%, from 0.03 to 0.4 v/v%, from 0.05 to 0.4 v/v%, from 0.07 to 0.4 v/v%, from 0.1 to 0.4 v/v%, from 0.15 to 0.4 v/v%, from 0.2 to 0.4 v/v%, from 0.25 to 0.4 v/v%, from 0.3 to 0.4 v/v%, from 0.35 to 0.4 v/v%, from 0.01 to 0.35 v/v%, from 0.03 to 0.35 v/v%, from 0.05 to 0.35 v/v%, from 0.07 to 0.35 v/v%, from 0.1 to 0.35 v/v%, from 0.15 to 0.35 v/v%, from 0.2 to 0.35 v/v%, from 0.25 to 0.35 v/v%, from 0.3 to 0.35 v/v%, from 0.01 to 0.3 v/v%, from 0.03 to 0.3 v/v%, from 0.05 to 0.3 v/v%, from 0.07 to 0.3 v/v%, from 0.1 to 0.3 v/v%, from 0.15 to 0.3 v/v%, from 0.2 to 0.3 v/v%, or from 0.25 to 0.3 v/v%. The alcohol content is preferably from 0.05 to 0.45 v/v%, more preferably from 0.07 to 0.4 v/v%, and even more preferably from 0.1 to 0.4 v/v%.

In the taste quality improvement methods according to some embodiments of the present invention, a total content of the one or more steviol glycosides selected from the group consisting of rebaudioside A, rebaudioside D, and rebaudioside M is not particularly limited, and the total content of these steviol glycosides in the beverages according to some embodiments of the present invention is from 50 to 800 ppm. In other embodiments of the present invention, the total content of the one or more steviol glycosides selected from the group consisting of rebaudioside A, rebaudioside D, and rebaudioside M in the beverage may be from 30 to 800 ppm, from 30 to 700 ppm, from 30 to 600 ppm, from 30 to 500 ppm, from 30 to 450 ppm, from 30 to 400 ppm, from 30 to 300 ppm, from 30 to 200 ppm, from 30 to 100 ppm, from 50 to 700 ppm, from 50 to 600 ppm, from 50 to 500 ppm, from 50 to 450 ppm, from 50 to 400 ppm, from 50 to 300 ppm, from 50 to 200 ppm, from 100 to 800 ppm, from 100 to 700 ppm, from 100 to 600 ppm, from 100 to 500 ppm, from 100 to 450 ppm, from 100 to 400 ppm, from 100 to 300 ppm, from 100 to 200 ppm, from 150 to 800 ppm, from 150 to 700 ppm, from 150 to 600 ppm, from 150 to 500 ppm, from 150 to 450 ppm, from 150 to 400 ppm, from 150 to 300 ppm, from 150 to 200 ppm, from 200 to 800 ppm, from 200 to 700 ppm, from 200 to 600 ppm, from 200 to 500 ppm, from 200 to 450 ppm, from 200 to 400 ppm, from 200 to 300 ppm, from 250 to 800 ppm, from 250 to 700 ppm, from 250 to 600 ppm, from 250 to 500 ppm, from 250 to 450 ppm, from 250 to 400 ppm, from 250 to 300 ppm, from 300 to 800 ppm, from 300 to 700 ppm, from 300 to 600 ppm, from 300 to 500 ppm, from 300 to 450 ppm, or from 300 to 400 ppm. The total content is preferably from 50 to 700 ppm, more preferably from 50 to 500 ppm, and even more preferably from 100 to 450 ppm. Contents of the steviol glycosides in the beverage may be calculated from amounts of raw materials added, or may be measured using a known analysis method such as liquid chromatography.

In the taste quality improvement methods according to some embodiments of the present invention, the content of rebaudioside A in the beverage may be from 0 to 800 ppm, from 0 to 700 ppm, from 0 to 600 ppm, from 0 to 500 ppm, from 0 to 400 ppm, from 0 to 300 ppm, from 0 to 200 ppm, from 0 to 100 ppm, from 0 to 90 ppm, from 0 to 80 ppm, from 0 to 70 ppm, from 0 to 60 ppm, from 0 to 50 ppm, from 0 to 40 ppm, from 0 to 30 ppm, from 0 to 20 ppm, from 0 to 10 ppm, from 0 to 5 ppm, from 30 to 800 ppm, from 30 to 700 ppm, from 30 to 600 ppm, from 30 to 500 ppm, from 30 to 450 ppm, from 30 to 400 ppm, from 30 to 300 ppm, from 30 to 200 ppm, from 30 to 100 ppm, from 50 to 700 ppm, from 50 to 600 ppm, from 50 to 500 ppm, from 50 to 450 ppm, from 50 to 400 ppm, from 50 to 300 ppm, from 50 to 200 ppm, from 100 to 800 ppm, from 100 to 700 ppm, from 100 to 600 ppm, from 100 to 500 ppm, from 100 to 450 ppm, from 100 to 400 ppm, from 100 to 300 ppm, from 100 to 200 ppm, from 150 to 800 ppm, from 150 to 700 ppm, from 150 to 600 ppm, from 150 to 500 ppm, from 150 to 450 ppm, from 150 to 400 ppm, from 150 to 300 ppm, from 150 to 200 ppm, from 200 to 800 ppm, from 200 to 700 ppm, from 200 to 600 ppm, from 200 to 500 ppm, from 200 to 450 ppm, from 200 to 400 ppm, from 200 to 300 ppm, from 250 to 800 ppm, from 250 to 700 ppm, from 250 to 600 ppm, from 250 to 500 ppm, from 250 to 450 ppm, from 250 to 400 ppm, from 250 to 300 ppm, from 300 to 800 ppm, from 300 to 700 ppm, from 300 to 600 ppm, from 300 to 500 ppm, from 300 to 450 ppm, or from 300 to 400 ppm. The content of rebaudioside A is preferably from 50 to 700 ppm, more preferably from 50 to 500 ppm, and even more preferably from 100 to 450 ppm. In other preferred embodiments, the content of rebaudioside A is from 0 to 50 ppm, from 0 to 30 ppm, from 0 to 20 ppm, or from 0 to 10 ppm. The content of rebaudioside A in the beverage may be calculated from amounts of raw materials added, or may be measured using a known analysis method such as liquid chromatography.

In the taste quality improvement methods according to some embodiments of the present invention, the content of rebaudioside D in the beverage may be from 0 to 800 ppm, from 0 to 700 ppm, from 0 to 600 ppm, from 0 to 500 ppm, from 0 to 400 ppm, from 0 to 300 ppm, from 0 to 200 ppm, from 0 to 100 ppm, from 0 to 90 ppm, from 0 to 80 ppm, from 0 to 70 ppm, from 0 to 60 ppm, 0 ppm or more and less than 60 ppm, from 0 to 50 ppm, from 0 to 40 ppm, from 0 to 30 ppm, from 0 to 20 ppm, from 0 to 10 ppm, from 0 to 5 ppm, from 30 to 800 ppm, from 30 to 700 ppm, from 30 to 600 ppm, from 30 to 500 ppm, from 30 to 450 ppm, from 30 to 400 ppm, from 30 to 300 ppm, from 30 to 200 ppm, from 30 to 100 ppm, from 50 to 700 ppm, from 50 to 600 ppm, from 50 to 500 ppm, from 50 to 450 ppm, from 50 to 400 ppm, from 50 to 300 ppm, from 50 to 200 ppm, from 100 to 800 ppm, from 100 to 700 ppm, from 100 to 600 ppm, from 100 to 500 ppm, from 100 to 450 ppm, from 100 to 400 ppm, from 100 to 300 ppm, from 100 to 200 ppm, from 150 to 800 ppm, from 150 to 700 ppm, from 150 to 600 ppm, from 150 to 500 ppm, from 150 to 450 ppm, from 150 to 400 ppm, from 150 to 300 ppm, from 150 to 200 ppm, from 200 to 800 ppm, from 200 to 700 ppm, from 200 to 600 ppm, from 200 to 500 ppm, from 200 to 450 ppm, from 200 to 400 ppm, from 200 to 300 ppm, from 250 to 800 ppm, from 250 to 700 ppm, from 250 to 600 ppm, from 250 to 500 ppm, from 250 to 450 ppm, from 250 to 400 ppm, from 250 to 300 ppm, from 300 to 800 ppm, from 300 to 700 ppm, from 300 to 600 ppm, from 300 to 500 ppm, from 300 to 450 ppm, or from 300 to 400 ppm. The content of rebaudioside D is preferably from 50 to 700 ppm, more preferably from 50 to 500 ppm, and even more preferably from 100 to 450 ppm. In other preferred embodiments, the content of rebaudioside D is from 0 to 50 ppm, from 0 to 30 ppm, from 0 to 20 ppm, or from 0 to 10 ppm. The content of rebaudioside D in the beverage may be calculated from amounts of raw materials added, or may be measured using a known analysis method such as liquid chromatography.

In the taste quality improvement methods according to some embodiments of the present invention, the content of rebaudioside M in the beverage may be from 0 to 800 ppm, from 0 to 700 ppm, from 0 to 600 ppm, from 0 to 500 ppm, from 0 to 400 ppm, from 0 to 300 ppm, from 0 to 200 ppm, from 0 to 100 ppm, from 0 to 90 ppm, from 0 to 80 ppm, from 0 to 70 ppm, from 0 to 60 ppm, from 0 to 50 ppm, 0 ppm or more and less than 50 ppm, from 0 to 40 ppm, from 0 to 30 ppm, from 0 to 20 ppm, from 0 to 10 ppm, from 0 to 5 ppm, from 30 to 800 ppm, from 30 to 700 ppm, from 30 to 600 ppm, from 30 to 500 ppm, from 30 to 450 ppm, from 30 to 400 ppm, from 30 to 300 ppm, from 30 to 200 ppm, from 30 to 100 ppm, from 50 to 700 ppm, from 50 to 600 ppm, from 50 to 500 ppm, from 50 to 450 ppm, from 50 to 400 ppm, from 50 to 300 ppm, from 50 to 200 ppm, from 100 to 800 ppm, from 100 to 700 ppm, from 100 to 600 ppm, from 100 to 500 ppm, from 100 to 450 ppm, from 100 to 400 ppm, from 100 to 300 ppm, from 100 to 200 ppm, from 150 to 800 ppm, from 150 to 700 ppm, from 150 to 600 ppm, from 150 to 500 ppm, from 150 to 450 ppm, from 150 to 400 ppm, from 150 to 300 ppm, from 150 to 200 ppm, from 200 to 800 ppm, from 200 to 700 ppm, from 200 to 600 ppm, from 200 to 500 ppm, from 200 to 450 ppm, from 200 to 400 ppm, from 200 to 300 ppm, from 250 to 800 ppm, from 250 to 700 ppm, from 250 to 600 ppm, from 250 to 500 ppm, from 250 to 450 ppm, from 250 to 400 ppm, from 250 to 300 ppm, from 300 to 800 ppm, from 300 to 700 ppm, from 300 to 600 ppm, from 300 to 500 ppm, from 300 to 450 ppm, or from 300 to 400 ppm. The content of rebaudioside M is preferably from 50 to 700 ppm, more preferably from 50 to 500 ppm, and even more preferably from 100 to 450 ppm. In other preferred embodiments, the content of rebaudioside M is from 0 to 50 ppm, from 0 to 30 ppm, from 0 to 20 ppm, or from 0 to 10 ppm. The content of rebaudioside M in the beverage may be calculated from amounts of raw materials added, or may be measured using a known analysis method such as liquid chromatography.

According to the taste quality improvement method according to an embodiment of the present invention, one or more taste qualities selected from the group consisting of sweetness intensity, thickness, miscellaneous taste, and alcohol feeling of a steviol glycoside-containing beverage can be improved. In the taste quality improvement method according to a preferred embodiment of the present invention, at least sweetness intensity is improved (enhanced). The taste quality improvement method according to a further preferred embodiment of the present invention can improve one or more taste qualities selected from the group consisting of thickness, miscellaneous taste, and alcohol feeling in addition to improvement of sweetness intensity.

With respect to the taste quality improvement method of the present invention, the "steviol glycoside", "alcohol", type of beverage", "sweetness intensity", "optional and additional sweetener", and "properties and optional and additional raw material" have the same meanings as the definitions described in the above section of "Beverage", and the numerical values thereof are the same as the numerical values described in the above section of "Beverage".

In the present specification, the phrase "at least" means that the number of a particular item may be not less than the listed number. In addition, within the present application, the phrase "about" means that the subject is present in a range of ±25%, ±10%, ±5%, ±3%, ±2%, or ±1% of the numerical value following "about". For example, "about 10" means a range of from 7.5 to 12.5.

### Examples

Hereinafter, the present invention will be specifically described by illustrating examples, but the present invention is not limited to the following examples.

### Example A: Evaluation with Various Sweeteners

### Preparation of Sample

Sample solutions were prepared by mixing rebaudioside A, rebaudioside D, rebaudioside M, sucralose, ethanol, and water in blending amounts shown in Table 1. The addition amounts were adjusted so that each sample had a sweetness intensity of 8. The sweetness intensity of each sample solution was calculated on the assumption that the sweetness degrees of rebaudioside A, D and M were about 225 times that of sucrose, and that the sweetness degree of sucralose was about 615 times that of sucrose. The ethanol concentration is a value calculated from the addition amount based on the ethanol concentration of the raw material ethanol used. The raw materials used are as follows: Rebaudioside A: purity of 95% or more, rebaudioside D: purity of 97% or more, rebaudioside M: purity of 94% or more, sucralose: "SPLENDA sucralose micronized powder" (available from TATE & LYLE), ethanol: fermentation ethanol (purity of 99% or more), water: ultrapure water.

**[Table 1]**

| Table 1: Sample composition | | | | |
|---|---|---|---|---|
| Sample No. | A1 | A2 | A3 | A4 |
| Rebaudioside A (ppm) | 355 | - | - | - |
| Rebaudioside D (ppm) | - | 355 | - | - |
| Rebaudioside M (ppm) | - | - | 355 | - |
| Sucralose (ppm) | - | - | - | 130 |
| Ethanol (v/v%) | 0.3 | 0.3 | 0.3 | 0.3 |

| | | | | |
|---|---|---|---|---|
| * In the table, "-" means that the corresponding raw material was not added. | | | | |

### Sensory Evaluation

For the samples prepared as described above, six trained professional panelists independently scored the four items "sweetness intensity", "thickness", "miscellaneous taste" and "alcohol feeling" on a scale of four grades, from Score 0 to Score 3, according to the following evaluation criteria. An ethanol-free beverage (containing the same amount of rebaudioside A, rebaudioside D, rebaudioside M or sucralose as that of the corresponding sample, but containing no ethanol) served as a control, and the evaluation criteria were pre-matched among the panelists. High scores of the sweetness intensity and the thickness mean higher intensity (preferable), and higher score of the miscellaneous taste and the alcohol feeling mean lower intensity (preferable).

**[Table 2]**

| Table 2: Sensory evaluation criteria | | | | |
|---|---|---|---|---|
| Score | Sweetness intensity | Thickness | Miscellaneous taste | Alcohol feeling |
| 3 | Perceived to be sweeter | Thickness more strongly perceived | Not perceived at all | Not perceived at all |
| 2 | Perceived to be slightly sweet | Slightly strongly perceived | Slightly perceived | Slightly perceived |
| 1 | Difference not perceived | Difference not perceived | Perceived | Perceived |
| 0 | The control perceived to be sweeter | The control's thickness more strongly perceived | Strongly perceived | Strongly perceived |

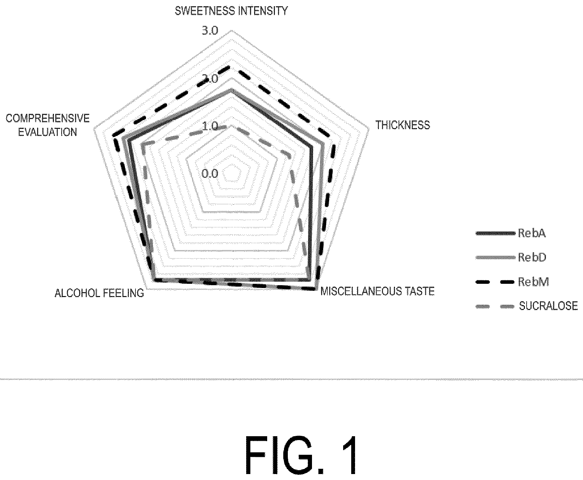

The average scores of the results obtained from the six panelists are shown in Table 3. The comprehensive evaluation was determined by summing the scores of the respective items and dividing the sum thereof by 4. The sensory evaluations of all the samples were plotted on a radar chart which is shown in FIG. 1. As for the sweetness intensity, when the average score exceeded 1 point, it was judged that the sweetness intensity was stronger than that of the control.

**[Table 3]**

| Table 3: Sensory test results (ethanol concentration: 0.3 v/v%) | | | | |
|---|---|---|---|---|
| Sample No. | A1 | A2 | A3 | A4 |
| Rebaudioside A (ppm) | 355 | - | - | - |
| Rebaudioside D (ppm) | - | 355 | - | - |
| Rebaudioside M (ppm) | - | - | 355 | - |
| Sucralose (ppm) | - | - | - | 130 |
| Sweetness intensity | 1.8 | 1.8 | 2.3 | 1.0 |
| Thickness | 1.8 | 2.0 | 2.3 | 1.3 |
| Miscellaneous taste | 2.8 | 3.0 | 3.0 | 2.8 |
| Alcohol feeling | 2.8 | 2.8 | 2.8 | 2.8 |
| Comprehensive evaluation | 2.3 | 2.4 | 2.6 | 1.9 |

### Example B: Evaluation Based on Difference in RebD Amount

### Preparation of Sample

Sample solutions were prepared by mixing rebaudioside D, ethanol, and water in blending amounts shown in Table 4. The addition amounts were adjusted so that each sample had a sweetness intensity of 1, 2, 4, 8, 10, 12 or 16. The sweetness intensity was calculated on the assumption that the sweetness degree of rebaudioside D was 225 times that of sucrose. The ethanol concentration is a value calculated from the addition amount based on the ethanol concentration of the raw material ethanol used. The raw materials used are as follows: Rebaudioside D: purity of 97% or more, ethanol: fermentation ethanol (purity of 99% or more), water: ultrapure water.

**[Table 4]**

| Table 4: Sample composition | | | | | | | |
|---|---|---|---|---|---|---|---|
| Sample No. | B1 | B2 | B3 | B4 | B5 | B6 | B7 |
| Rebaudioside D (ppm) | 44 | 89 | 178 | 355 | 444 | 533 | 710 |
| Sweetness intensity (calculated) | 1 | 2 | 4 | 8 | 10 | 12 | 16 |
| Ethanol (v/v%) | 0.3 | 0.3 | 0.3 | 0.3 | 0.3 | 0.3 | 0.3 |

### Sensory Evaluation

For the samples prepared as described above, six trained professional panelists independently scored the four items "sweetness intensity", "thickness", "miscellaneous taste" and "alcohol feeling" on a scale of four grades, from Score 0 to Score 3, according to the same evaluation criteria as in Example A, using the same criteria by the same method as in Example A. An ethanol-free beverage (containing the same amount of rebaudioside D as that of the corresponding sample, but containing no ethanol) served as a control, and the evaluation criteria were pre-matched among the panelists.

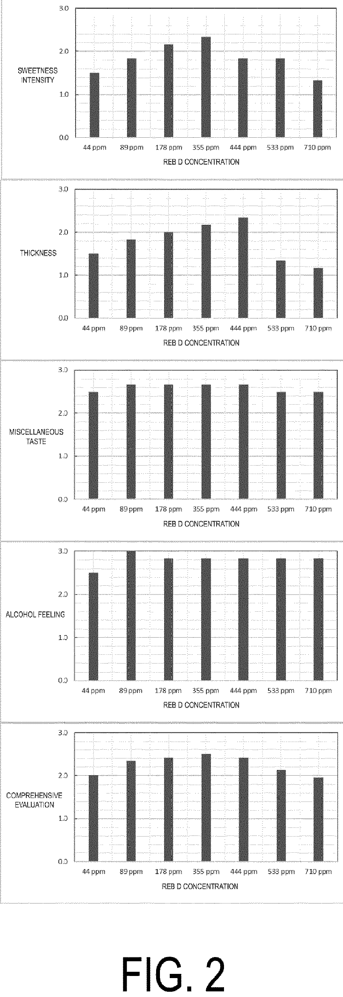

The average scores of the results obtained from the six panelists are shown in Table 5. The comprehensive evaluation was determined by summing the scores of the respective items and dividing the sum thereof by 4. The evaluations of each sample were plotted on graphs which are shown in FIG. 2. As for the sweetness intensity, when the average score exceeded 1 point, it was judged that the sweetness intensity was stronger than that of the control.

**[Table 5]**

| Table 5: Sensory test results (ethanol concentration: 0.3 v/v%) | | | | | | | |
|---|---|---|---|---|---|---|---|
| Sample No. | B1 | B2 | B3 | B4 | B5 | B6 | B7 |
| Rebaudioside D (ppm) | 44 | 89 | 178 | 355 | 444 | 533 | 710 |
| Sweetness intensity | 1.5 | 1.8 | 2.2 | 2.3 | 1.8 | 1.8 | 1.3 |
| Thickness | 1.5 | 1.8 | 2.0 | 2.2 | 2.3 | 1.3 | 1.2 |
| Miscellaneous taste | 2.5 | 2.7 | 2.7 | 2.7 | 2.7 | 2.5 | 2.5 |
| Alcohol feeling | 2.5 | 3.0 | 2.8 | 2.8 | 2.8 | 2.8 | 2.8 |
| Comprehensive evaluation | 2.0 | 2.3 | 2.4 | 2.5 | 2.4 | 2.1 | 2.0 |

### Example C: Evaluation Based on Difference in RebM Amount

### Preparation of Sample

Sample solutions were prepared by mixing rebaudioside M, ethanol, and water in blending amounts shown in Table 6. The addition amounts were adjusted so that each sample had a sweetness intensity of 1, 2, 4, 8, 10, 12 or 16. The sweetness intensity was calculated on the assumption that the sweetness degree of rebaudioside M was 225 times that of sucrose. The ethanol concentration is a value calculated from the addition amount based on the ethanol concentration of the raw material ethanol used. The raw materials used are as follows: Rebaudioside M: purity of 94% or more, ethanol: fermentation ethanol (purity of 99% or more), water: ultrapure water.

**[Table 6]**

| Table 6: Sample composition | | | | | | | |
|---|---|---|---|---|---|---|---|
| Sample No. | C1 | C2 | C3 | C4 | C5 | C6 | C7 |
| Rebaudioside M (ppm) | 44 | 89 | 178 | 355 | 444 | 533 | 710 |
| Sweetness intensity (calculated) | 1 | 2 | 4 | 8 | 10 | 12 | 16 |
| Ethanol (v/v%) | 0.3 | 0.3 | 0.3 | 0.3 | 0.3 | 0.3 | 0.3 |

### Sensory Evaluation

For the samples prepared as described above, six trained professional panelists independently scored the four items "sweetness intensity", "thickness", "miscellaneous taste" and "alcohol feeling" on a scale of four grades, from Score 0 to Score 3, according to the same evaluation criteria as in Example A, using the same criteria by the same method as in Example A. An ethanol-free beverage (containing the same amount of rebaudioside M as that of the corresponding sample, but containing no ethanol) served as a control, and the evaluation criteria were pre-matched among the panelists.

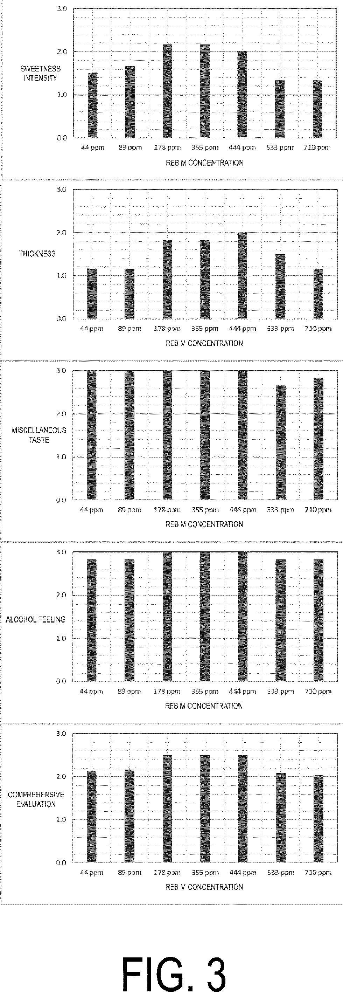

The average scores of the results obtained from the six panelists are shown in Table 7. The comprehensive evaluation was determined by summing the scores of the respective items and dividing the sum thereof by 4. The evaluations of each sample were plotted on graphs which are shown in FIG. 3. As for the sweetness intensity, when the average score exceeded 1 point, it was judged that the sweetness intensity was stronger than that of the control.

**[Table 7]**

| Table 7: Sensory test results (ethanol concentration: 0.3 v/v%) | | | | | | | |
|---|---|---|---|---|---|---|---|
| Sample No. | C1 | C2 | C3 | C4 | C5 | C6 | C7 |
| Rebaudioside M (ppm) | 44 | 89 | 178 | 355 | 444 | 533 | 710 |
| Sweetness intensity | 1.5 | 1.7 | 2.2 | 2.2 | 2.0 | 1.3 | 1.3 |
| Thickness | 1.2 | 1.2 | 1.8 | 1.8 | 2.0 | 1.5 | 1.2 |
| Miscellaneous taste | 3.0 | 3.0 | 3.0 | 3.0 | 3.0 | 2.7 | 2.8 |
| Alcohol feeling | 2.8 | 2.8 | 3.0 | 3.0 | 3.0 | 2.8 | 2.8 |
| Comprehensive evaluation | 2.1 | 2.2 | 2.5 | 2.5 | 2.5 | 2.1 | 2.0 |

### Example D: Evaluation Based on Difference in Ethanol Concentration (RebD)

### Preparation of Sample

Sample solutions were prepared by mixing rebaudioside D, ethanol, and water in blending amounts shown in Table 8. The addition amounts were adjusted so that each sample had a sweetness intensity of 8. The sweetness intensity was calculated on the assumption that the sweetness degree of rebaudioside D was 225 times that of sucrose. The ethanol concentration is a value calculated from the addition amount based on the ethanol concentration of the raw material ethanol used. The raw materials used are as follows: Rebaudioside D: purity of 97% or more, ethanol: fermentation ethanol (purity of 99% or more), water: ultrapure water.

**[Table 8]**

| Table 8: Sample composition | | | | | | | | |
|---|---|---|---|---|---|---|---|---|
| Sample No. | D1 | D2 | D3 | D4 | D5 | D6 | D7 | D8 |
| Rebaudioside D (ppm) | 355 | 355 | 355 | 355 | 355 | 355 | 355 | 355 |
| Ethanol (v/v%) | 0.01 | 0.05 | 0.1 | 0.2 | 0.3 | 0.4 | 0.5 | 0.6 |

### Sensory Evaluation

For the samples prepared as described above, six trained professional panelists independently scored the four items "sweetness intensity", "thickness", "miscellaneous taste" and "alcohol feeling" on a scale of four grades, from Score 0 to Score 3, according to the same evaluation criteria as in Example A, using the same criteria by the same method as in Example A. An ethanol-free beverage (RebD content: 355 ppm) served as a control, and the evaluation criteria were pre-matched among the panelists.

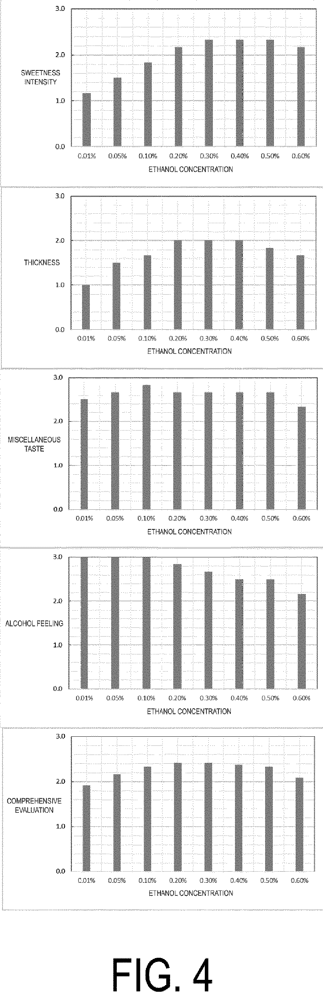

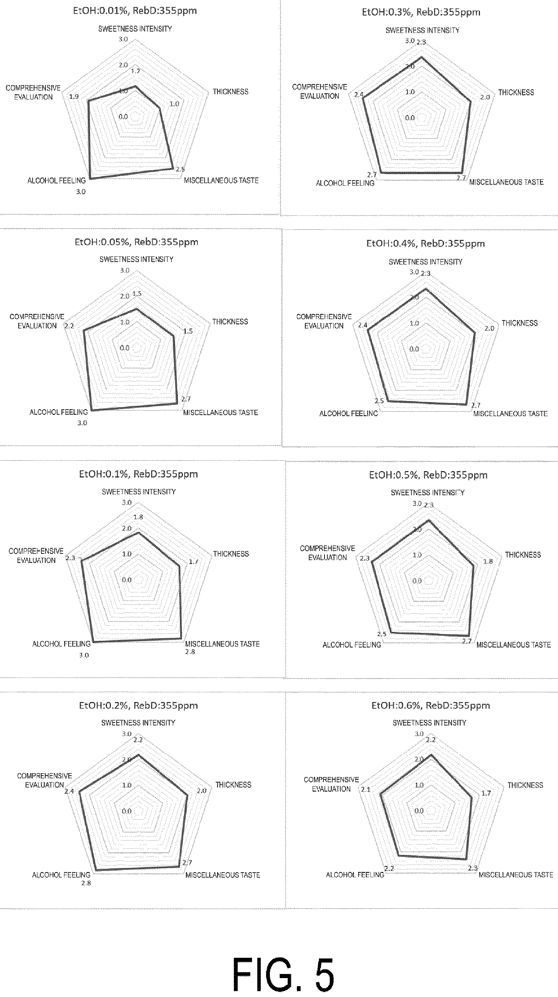

The average scores of the results obtained from the six panelists are shown in Table 9. The comprehensive evaluation was determined by summing the scores of the respective items and dividing the sum thereof by 4. The evaluations of each sample were plotted on graphs which are shown in FIG. 4. As for the sweetness intensity, when the average score exceeded 1 point, it was judged that the sweetness intensity was stronger than that of the control. The taste quality evaluation of each sample was summarized in a radar chart which is shown in FIG. 5.

**[Table 9]**

| Table 9: Sensory test results | | | | | | | | |
|---|---|---|---|---|---|---|---|---|
| Sample No. | D1 | D2 | D3 | D4 | D5 | D6 | D7 | D8 |
| Rebaudioside D (ppm) | 355 | 355 | 355 | 355 | 355 | 355 | 355 | 355 |
| Ethanol (%) | 0.01 | 0.05 | 0.1 | 0.2 | 0.3 | 0.4 | 0.5 | 0.6 |
| Sweetness intensity | 1.2 | 1.5 | 1.8 | 2.2 | 2.3 | 2.3 | 2.3 | 2.2 |
| Thickness | 1.0 | 1.5 | 1.7 | 2.0 | 2.0 | 2.0 | 1.8 | 1.7 |
| Miscellaneous taste | 2.5 | 2.7 | 2.8 | 2.7 | 2.7 | 2.7 | 2.7 | 2.3 |
| Alcohol feeling | 3.0 | 3.0 | 3.0 | 2.8 | 2.7 | 2.5 | 2.5 | 2.2 |
| Comprehensive evaluation | 1.9 | 2.2 | 2.3 | 2.4 | 2.4 | 2.4 | 2.3 | 2.1 |

### Example E: Evaluation Based on Difference in Ethanol Concentration (RebM)

### Preparation of Sample

Sample solutions were prepared by mixing rebaudioside M, ethanol, and water in blending amounts shown in Table 10. The addition amounts were adjusted so that each sample had a sweetness intensity of 8. The sweetness intensity was calculated on the assumption that the sweetness degree of rebaudioside M was 225 times that of sucrose. The ethanol concentration is a value calculated from the addition amount based on the ethanol concentration of the raw material ethanol used. The raw materials used are as follows: Rebaudioside M: purity of 94% or more, ethanol: fermentation ethanol (purity of 99% or more), water: ultrapure water.

**[Table 10]**

| Table 10: Sample composition | | | | | | | | |
|---|---|---|---|---|---|---|---|---|
| Sample No. | E1 | E2 | E3 | E4 | E5 | E6 | E7 | E8 |
| Rebaudioside M (ppm) | 355 | 355 | 355 | 355 | 355 | 355 | 355 | 355 |
| Ethanol (%) | 0.01 | 0.05 | 0.1 | 0.2 | 0.3 | 0.4 | 0.5 | 0.6 |

### Sensory Evaluation

For the samples prepared as described above, six trained professional panelists independently scored the four items "sweetness intensity", "thickness", "miscellaneous taste" and "alcohol feeling" according to the following evaluation criteria. The "sweetness intensity", "thickness" and "alcohol feeling" were independently scored on a scale of four grades, from Score 0 to Score 3, and the "miscellaneous taste" was independently scored on a scale of five grades, from Score 0 to Score 4. An ethanol-free beverage (RebM content: 355 ppm) served as a control, and the evaluation criteria were pre-matched among the panelists. High scores of the sweetness intensity and the thickness mean higher intensity (preferable), and higher score of the miscellaneous taste and the alcohol feeling mean lower intensity (preferable). Note that the "Score 3: Difference not perceived" in the evaluation of the "miscellaneous taste" in this example is equivalent to the "Score 3: Not perceived at all" in the evaluations of Examples A to D, and the "Score 4: Miscellaneous taste improved" in this example means that "the miscellaneous taste was reduced as compared with that of the control".

**[Table 11]**

| Table 11: Sensory evaluation criteria | | | | |
|---|---|---|---|---|
| Score | Sweetness intensity | Thickness | Miscellaneous taste | Alcohol feeling |
| 4 | | | Miscellaneous taste improved | |
| 3 | Perceived to be sweeter | Thickness more strongly perceived | Difference not perceived | Not perceived at all |
| 2 | Perceived to be slightly sweet | Slightly strongly perceived | Slightly perceived | Slightly perceived |
| 1 | Difference not perceived | Difference not perceived | Perceived | Perceived |
| 0 | The control perceived to be sweeter | The control's thickness more strongly perceived | Strongly perceived | Strongly perceived |

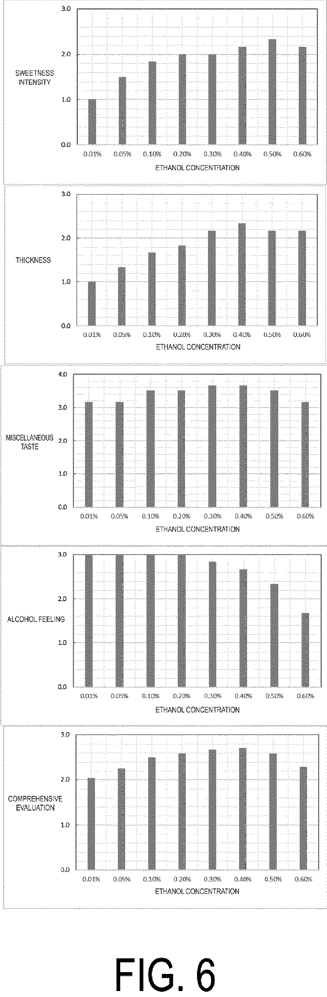

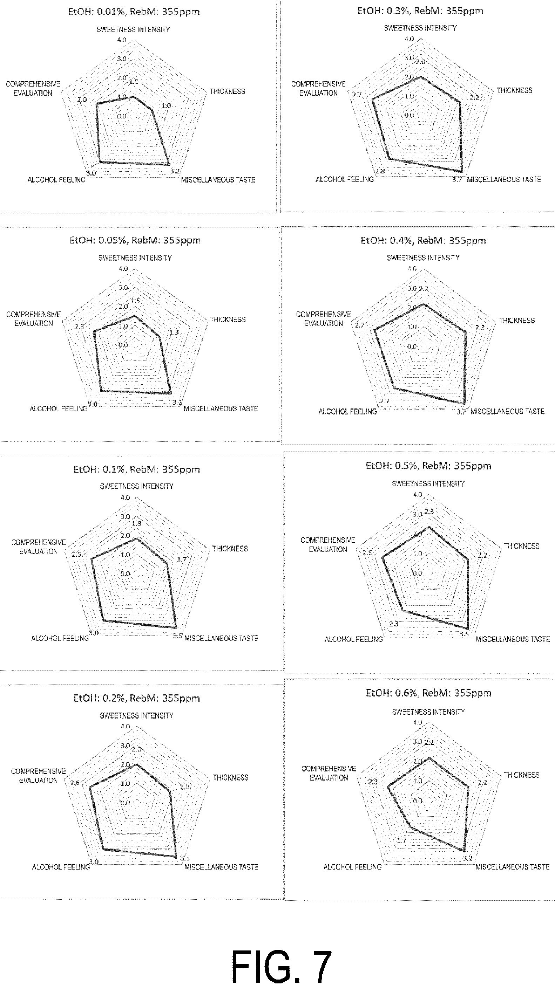

The average scores of the results obtained from the six panelists are shown in Table 12. The comprehensive evaluation was determined by summing the scores of the respective items and dividing the sum thereof by 4. As for the sweetness intensity, when the average score exceeded 1 point, it was judged that the sweetness intensity was stronger than that of the control. The evaluations of each sample were plotted on graphs which are shown in FIG. 6. The taste quality evaluation of each sample was summarized in a radar chart which is shown in FIG. 7.

**[Table 12]**

| Table 12: Sensory test results | | | | | | | | |
|---|---|---|---|---|---|---|---|---|
| Sample No. | E1 | E2 | E3 | E4 | E5 | E6 | E7 | E8 |
| Rebaudioside M (ppm) | 355 | 355 | 355 | 355 | 355 | 355 | 355 | 355 |
| Ethanol (%) | 0.01 | 0.05 | 0.1 | 0.2 | 0.3 | 0.4 | 0.5 | 0.6 |
| Sweetness intensity | 1.0 | 1.5 | 1.8 | 2.0 | 2.0 | 2.2 | 2.3 | 2.2 |
| Thickness | 1.0 | 1.3 | 1.7 | 1.8 | 2.2 | 2.3 | 2.2 | 2.2 |
| Miscellaneous taste | 3.2 | 3.2 | 3.5 | 3.5 | 3.7 | 3.7 | 3.5 | 3.2 |
| Alcohol feeling | 3.0 | 3.0 | 3.0 | 3.0 | 2.8 | 2.7 | 2.3 | 1.7 |
| Comprehensive evaluation | 2.0 | 2.3 | 2.5 | 2.6 | 2.7 | 2.7 | 2.6 | 2.3 |

## Claims

1. A beverage comprising one or more steviol glycosides selected from the group consisting of rebaudioside A, rebaudioside D, and rebaudioside M,
the beverage having an alcohol content of 0.05 v/v% or more and less than 0.5 v/v%.

2. The beverage according to claim 1, wherein a total content of the one or more steviol glycosides selected from the group consisting of rebaudioside A, rebaudioside D, and rebaudioside M is from 50 to 800 ppm.

3. The beverage according to claim 1 or 2, wherein a content of rebaudioside D is from 30 to 600 ppm.

4. The beverage according to any one of claims 1 to 3, wherein a content of rebaudioside M is from 30 to 600 ppm.

5. The beverage according to any one of claims 1 to 4, wherein a content of rebaudioside A is from 0 to 400 ppm.

6. The beverage according to any one of claims 1 to 5, further comprising one or more steviol glycosides selected from the group consisting of rebaudioside B, rebaudioside C, rebaudioside E, rebaudioside F, rebaudioside I, rebaudioside J, rebaudioside K, rebaudioside N, rebaudioside O, rebaudioside Q, rebaudioside R, dulcoside A, dulcoside C, rubusoside, steviol, steviolmonoside, steviolbioside, and stevioside.

7. The beverage according to any one of claims 1 to 6, further comprising a low-intensity sweetener.

8. The beverage according to claim 7, wherein the low-intensity sweetener contains one or more sweeteners selected from glucose, sucrose, fructose, maltose, oligosaccharide, lactose, psicose, xylitol, erythritol, allose, tagatose, xylose, ribose, high-fructose corn syrup, and a combination thereof.

9. The beverage according to any one of claims 1 to 8, wherein the beverage has an energy of 100 Kcal/100 ml or less.

10. The beverage according to any one of claims 1 to 9, wherein the beverage is a sparkling beverage.

11. The beverage according to any one of claims 1 to 10, further comprising a high-intensity sweetener other than the steviol glycoside.

12. A 1.2 to 10-fold concentrate for providing the beverage according to any one of claims 1 to 11.

13. A method for improving a taste quality of a steviol glycoside-containing beverage, the method comprising adjusting an alcohol content of a beverage containing one or more steviol glycosides selected from the group consisting of rebaudioside A, rebaudioside D, and rebaudioside M to an amount of more than 0 v/v% and less than 0.5 v/v%.

14. A beverage comprising one or more steviol glycosides selected from the group consisting of rebaudioside D and rebaudioside M,
the beverage having:
(a) a content of rebaudioside D of 0 ppm or more and less than 60 ppm, and a content of rebaudioside M of from 30 to 600 ppm,
(b) a content of rebaudioside M of 0 ppm or more and less than 50 ppm, and a content of rebaudioside D of from 30 to 600 ppm, or
(c) a total content of rebaudioside D and rebaudioside M of more than 0 ppm and less than 110 ppm, and
an alcohol content of more than 0 v/v% and less than 0.5 v/v%.
